(19) Europäisches Patentamt
European Patent Office
Office européen des brevets

(11) EP 2 131 426 B1

(12) EUROPEAN PATENT SPECIFICATION

(45) Date of publication and mention of the grant of the patent:
**10.02.2016 Bulletin 2016/06**

(51) Int Cl.:
***H01M 4/86*** *(2006.01)* ***H01M 4/92*** *(2006.01)*
*H01M 8/10* *(2006.01)*

(21) Application number: **08157494.9**

(22) Date of filing: **03.06.2008**

(54) **Electrode for Fuel Cell, Method of Manufacturing the Electrode, and Fuel Cell Employing the Electrode**

Elektrode für eine Brennstoffzelle, Verfahren zur Herstellung der Elektrode und Brennstoffzelle mit dieser Elektrode

Électrode pour pile à combustible, procédé de fabrication de l'électrode, et pile à combustible utilisant l'électrode

(84) Designated Contracting States:
**DE FR GB IT**

(43) Date of publication of application:
**09.12.2009 Bulletin 2009/50**

(73) Proprietor: **Samsung Electronics Co., Ltd.**
**Suwon-si, Gyeonggi-do, 443-742 (KR)**

(72) Inventors:
- **Choi, Seong-woo**
  **Gyeonggi-do (KR)**
- **Park, Jung-ock**
  **Gyeonggi-do (KR)**

(74) Representative: **Zijlstra, Robert Wiebo Johan**
**Elkington and Fife LLP**
**Prospect House**
**8 Pembroke Road**
**Sevenoaks, Kent TN13 1XR (GB)**

(56) References cited:
**EP-A- 1 760 110** **EP-A- 1 881 549**
**US-A1- 2008 118 817**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 131 426 B1

## Description

Aspects of the present invention relate to an electrode for a fuel cell and a fuel cell employing the same.

Fuel cells employing a polymer electrolyte membrane as an electrolyte can be operated at a relatively low temperature and can be manufactured in small sizes. Fuel cells are expected to be used as power sources for electrical automobiles or household distributed power systems. A perfluorocarbonsulfonate polymer membrane, represented as NAFION (trade name), has been used as a polymer electrolyte membrane in polymer electrolyte membrane fuel cells.

However, such a polymer electrolyte membrane must be humidified for proton conduction. Moreover, in order to increase the efficiency of a fuel cell system, a polymer electrolyte membrane fuel cell must be operated at a high temperature, for example, a temperature of 100°C or more. However, water is evaporated from an electrolyte membrane at high temperatures, and thus, an electrolyte membrane loses functionality as a solid electrolyte.

In view of the above problem, non-humidified electrolyte membranes that can be operated under non-humidifying conditions, at high temperatures of 100°C or more have been developed. For example, Japanese Patent Laid-Open Publication No. Hei. 11-503262 discloses phosphoric acid-doped polybenzimidazole or the like, which is used as a material for a non-humidified electrolyte membrane.

In low temperature perfluorocarbonsulfonate polymer electrolyte membrane fuel cells, in order to prevent defective gas diffusion in an electrode (in particular in a cathode), which may be caused by water (product water) generated during electric power production in the electrode, hydrophobic electrodes including polytetrafluoroethylene (PTFE) have been used (e.g., Japanese Patent Laid-Open Publication No. Hei. 05-283082). In high temperature (150-200°C) phosphoric acid fuel cells, liquid phosphoric acid is used as an electrolyte. However, a large quantity of the liquid phosphoric acid is present at an electrode, thereby hindering gas diffusion. Thus, an electrode that has a layer of water-repellent PTFE that is capable of preventing the blocking of micropores, due to phosphoric acid, has been proposed.

EP1881549 addresses the issue of interfacial contact between electrode, membrane and fuel gas in PAFCs, wherein the electrode comprises a catalyst layer containing a benzoxazine monomer as additive.

In fuel cells employing a phosphoric acid-impregnated polybenzimidazole (PBI) electrolyte membrane, as a high-temperature, non-humidified electrolyte, in order to promote contact between an electrode and an electrolyte membrane, attempts have been made to impregnate an electrode with liquid phosphoric acid and to load a larger quantity of a metal catalyst. However, the power output characteristics of such fuel cells may not be satisfactory, and thus, there is much room for improvement.

In phosphoric acid-doped solid polymer electrolyte fuel cells, the supply of air to a cathode requires an aging time of about one week, even when using an optimal electrode composition. Although it is possible to improve the performance of the cathode and to reduce the aging time, by replacing the air of the cathode with oxygen, these fuel cells may not be commercially available.

Aspects of the present invention provide an electrode for a fuel cell. The electrode shows better oxygen permeability when air is used in a cathode, better wettability in phosphoric acid, and good resistance to heat and phosphoric acid. Aspects of the present invention relate to a method of manufacturing the electrode, and a fuel cell employing the electrode.

According to aspects of the present invention, there is provided an electrode including a catalyst layer for a fuel cell. The catalyst layer includes a catalyst and at least one selected from the group consisting of: a first benzoxazine monomer represented by Formula 1 below and a second benzoxazine monomer represented by Formula 2 below; a mixture thereof, a homopolymer consisting of the first benzoxazine monomer, a homopolymer consisting of the second benzoxazine monomer, and a copolymer consisting of the first and second benzoxazine monomers.

<Formula 1>

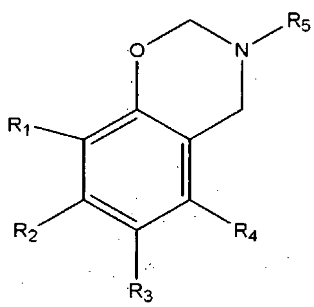

In Formula 1:

$R_1$, $R_2$, $R_3$, and $R_4$ are each independently selected from hydrogen, a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C2-C20 heteroaryl group, a substituted or unsubstituted C4-C20 cycloalkyl group, a substituted or unsubstituted C2-C20 heterocyclic group, a halogen atom, a hydroxy group, or a cyano group;

$R_5$ is a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, or a substituted or unsubstituted C2-C20 heterocyclic alkyl group; and

at least one of $R_1$, $R_2$, $R_3$, $R_4$, and $R_5$ is fluorine or a fluorine-containing functional group.

<Formula 2>

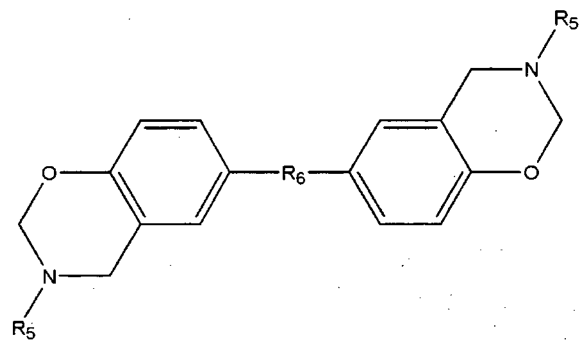

In Formula 2:

$R_5$ is selected from the group consisting of a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, and a substituted or unsubstituted C2-C20 heterocyclic alkyl group;

$R_6$ is selected from the group consisting of a substituted or unsubstituted C1-C20 alkylene group, a substituted or unsubstituted C2-C20 alkenylene group, a substituted or unsubstituted C2-C20 alkynylene group, a substituted or unsubstituted C6-C20 arylene group, a substituted or unsubstituted C2-C20 heteroarylene group, -C(=O)-, and $-SO_2-$; and

at least one of $R_5$ and $R_6$ is fluorine or a fluorine-containing functional group.

According to aspects of the present invention, there is provided a method of manufacturing an electrode for a fuel cell, the method including: dispersing a catalyst in a solvent to obtain a dispersion solution; adding a mixture including a solvent and at least one of a first benzoxazine monomer represented by Formula 1 and a second benzoxazine monomer represented by Formula 2, to the dispersion solution, followed by stirring, to obtain a coating solution; and coating the coating solution onto a surface of a carbon support.

According to another aspect of the present invention, there is provided a fuel cell including the above-described electrode.

Additional aspects and/or advantages of the invention will be set forth in part in the description which follows and, in part, will be obvious from the description, or may be learned by practice of the invention.

BRIEF DESCRIPTION OF THE DRAWINGS

These and/or other aspects and advantages of the invention will become apparent and more readily appreciated from the following description of the embodiments, taken in conjunction with the accompanying drawings of which:

FIG. 1 illustrates changes in cell voltages with respect to operating times, in fuel cells manufactured according to presently taught Example 1 and Comparative Examples 1 and 2;
FIG. 2 illustrates changes in cell potentials with respect to current densities, in fuel cells manufactured according to presently taught Examples 1 and 2 and Comparative Example 1; and
FIG. 3 illustrates a fuel cell including an electrode, according to aspects of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

Aspects of the present invention provide an electrode for a fuel cell, the electrode including a catalyst layer which includes a catalyst and at least one selected from the group consisting of: a first benzoxazine monomer represented by Formula 1 below, a second benzoxazine monomer represented by Formula 2 below; a polymer thereof, and a mixture thereof. The polymer can include a homopolymer of the first benzoxazine monomer represented Formula 1, a homopolymer of the second benzoxazine monomer represented by Formula 2, and a copolymer of the first benzoxazine, monomer represented by Formula 1 and the second benzoxazine monomer represented by Formula 2.

<Formula 1>

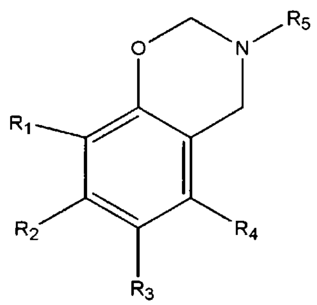

In Formula 1:

$R_1$, $R_2$, $R_3$, and $R_4$ are each independently selected from hydrogen, a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C2-C20 heteroaryl group, a substituted or unsubstituted C4-C20 cycloalkyl group, a substituted or unsubstituted C2-C20 heterocyclic group, a halogen atom, a hydroxy group, and a cyano group;

$R_5$ is selected from a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, or a substituted or unsubstituted C2-C20 heterocyclic alkyl group; and

at least one selected from $R_1$, $R_2$, $R_3$, $R_4$, and $R_5$ is fluorine or a fluorine-containing functional group, and

<Formula 2>

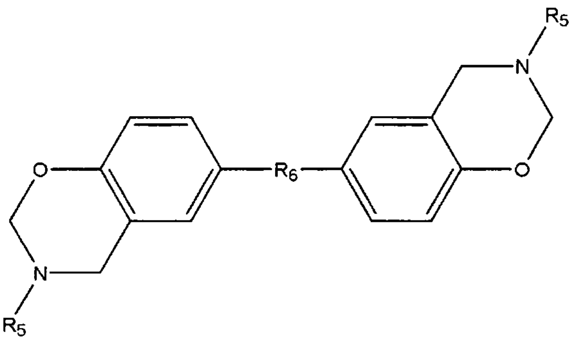

In Formula 2:

$R_5$ is selected from a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, and a substituted or unsubstituted C2-C20 heterocyclic alkyl group;

$R_6$ is selected from the group consisting of a substituted or unsubstituted C1-C20 alkylene group, a substituted or unsubstituted C2-C20 alkenylene group, a substituted or unsubstituted C2-C20 alkynylene group, a substituted or unsubstituted C6-C20 arylene group, a substituted or unsubstituted C2-C20 heteroarylene group, -C(=O)-, and $-SO_2-$; and

at least one selected of $R_5$ and $R_6$ is fluorine or a fluorine-containing functional group.

In Formula 1, the fluorine-containing functional group is not particularly limited provided that it is a substituent containing fluorine.

An electrode, according to aspects of the present invention, has fluorine or a fluorine-containing functional group incapable of being dissolved in phosphoric acid ($H_3PO_4$) and that causes no catalyst poisoning. The electrode shows good oxygen permeability even when air flows into the electrode (used as a cathode). The electrode can uniformly contain a material with a high hydrophilicity (or good affinity to phosphoric acid), i.e., at least one selected from the group consisting of at least one of a first benzoxazine monomer of Formula 1 and a second benzoxazine monomer of Formula 2, a polymer thereof, and a mixture thereof. The electrode can thereby have an enhanced wettability with phosphoric acid and can exhibit a resistance to heat and phosphoric acid. Phosphoric acid preferentially permeates into micropores of the electrode. Thus, a problem caused when phosphoric acid mainly permeates into macropores of an electrode, i.e., flooding that hinders gas diffusion due to the presence of a large quantity of liquid phosphoric acid in an electrode can be efficiently prevented, thereby increasing gas (fuel gas or oxidizing gas)-liquid (phosphoric acid)-solid (catalyst) interfacial areas.

In aspects of the present invention, the content of at least one of the first benzoxazine monomer of Formula 1 and the second benzoxazine monomer of Formula 2, a polymer thereof, or a mixture thereof, may be 0.001 to 0.5 parts by weight, based on 1 part by weight of the catalyst.

In Formula 1, $R_1$, $R_2$, $R_3$, and $R_4$ may be a C1-C20 alkyl group (e.g.: a methyl group, an ethyl group, a butyl group, a t-butyl group), an allyl group, a C6-C20 aryl group, a C2-C20 alkenyl group, a C2-C20 alkynyl group, fluorine (F), a fluorinated C1-C20 alkyl group, or a fluorinated C6-C20 aryl group.

In Formulae 1 and 2, $R_5$ may be $-CH_2-CH=CH_2$, or one of groups represented by the following formulae:

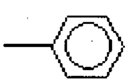
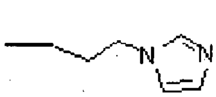
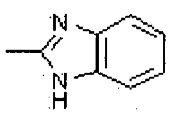
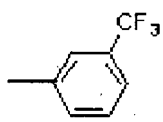

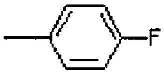 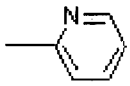 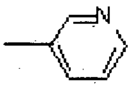 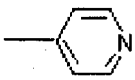 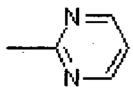

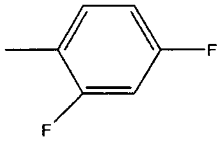 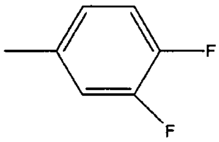

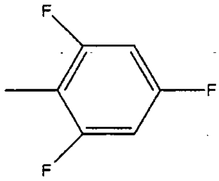 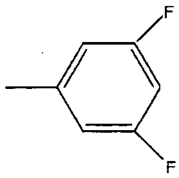

In Formula 2, $R_6$ may be $-C(CH_3)_2-$, $-C(CF_3)_2-$, $-C(=O)-$, $-SO_2-$, $-CH_2-$, $-C(CCl_3)-$,$-CH(CH_3)-$, $-CH(CF_3)-$, or a group represented by the following formula:

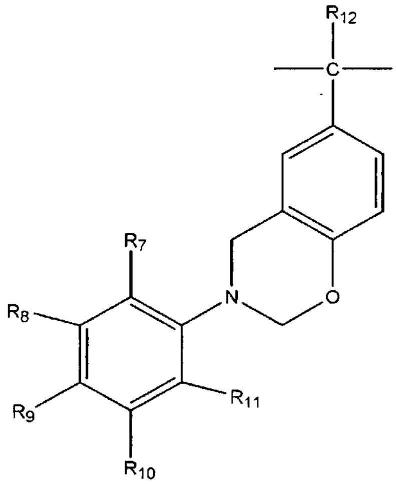

wherein $R_7$, $R_8$, $R_9$, $R_{10}$, and $R_{11}$ are each independently selected from hydrogen, F, $CHF_2$, $CH_2F$, $CF_3$, or a C1-C20 alkyl group, and $R_{12}$ is hydrogen, a methyl group, an ethyl group, a propyl group, F, $CHF_2$, $CH_2F$, or $CF_3$.

The first benzoxazine monomer of Formula 1 may be a compound represented by Formula 3 or 4 below:

<Formula 3>

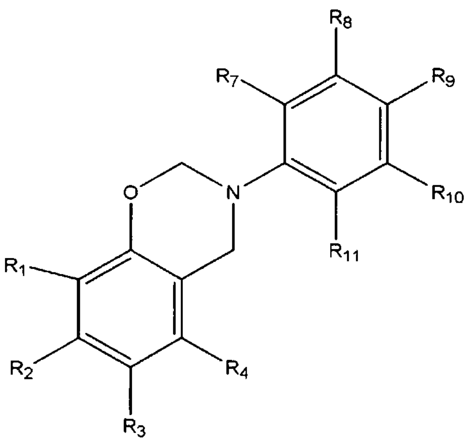

wherein $R_1$, $R_2$, $R_3$, and $R_4$ are each independently hydrogen, F, $CHF_2$, $CH_2F$, $CF_3$, or a C1-C20 alkyl group;

$R_7$, $R_8$, $R_9$, $R_{10}$, and $R_{11}$ are each independently hydrogen, F, $CHF_2$, $CH_2F$, $CF_3$, or a C1-C20 alkyl group; and

at least one of $R_1$, $R_2$, $R_3$, $R_4$, $R_7$, $R_8$, $R_9$, $R_{10}$, and $R_{11}$ is F, $CHF_2$, $CH_2F$, or $CF_3$, or

<Formula 4>

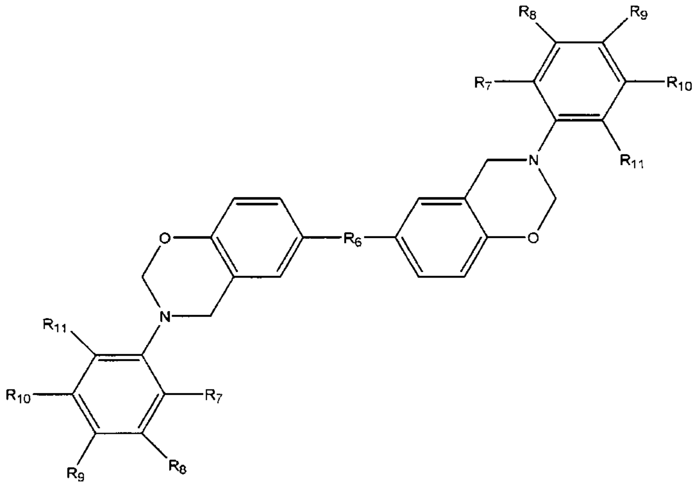

In Formula 4:

$R_6$ is $-C(CH_3)_2-$, $CH_2$, $-C(CF_3)_2-$, $-C(CHF_2)_2-$, $-C(CH_2F)_2-$, or a group represented by the following structural formula:

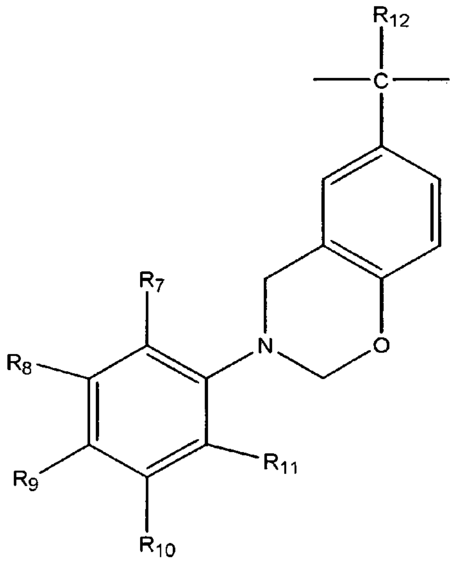

;

$R_7$, $R_8$, $R_9$, $R_{10}$, and $R_{11}$ are each independently selected from hydrogen, a C1-C20 alkyl group, an allyl group, a C6-C20 aryl group, a t-butyl group, a C2-C20 alkenyl group, a C2-C20 alkynyl group, F, a fluorinated C1-C20 alkyl group (e.g.,: $CHF_2$, $CH_2F$, $CF_3$), or a fluorinated C6-C20 aryl group, one of $R_7$, $R_8$, $R_9$, $R_{10}$;

$R_{11}$ is F, $CHF_2$, $CH_2F$, or $CF_3$; and

$R_{12}$ is hydrogen, a methyl group, an ethyl group, a propyl group, F, $CHF_2$, $CH_2F$, or $CF_3$.

The compound of Formula 3 may be one selected from compounds represented by Formulae 5 through 21 below:

<Formula 5>

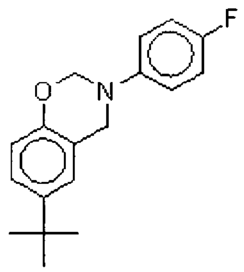

t-BuPh-4FA

<Formula 6>

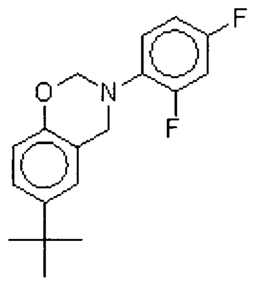

<Formula 7>

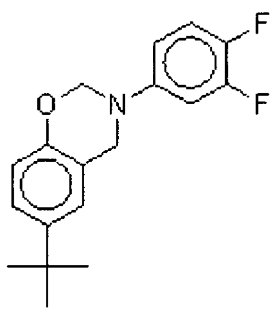

<Formula 8>

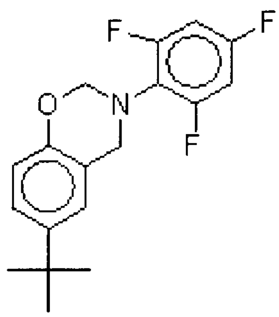

<Formula 9>

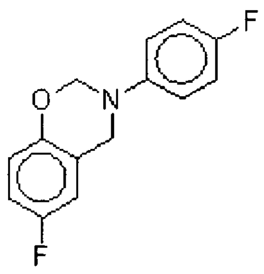

<Formula 10>

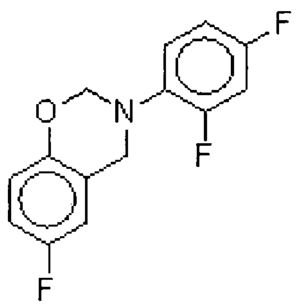

<Formula 11>

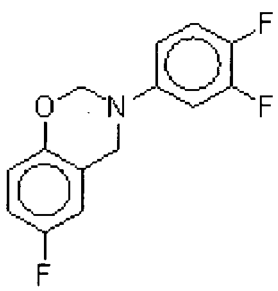

<Formula 12>

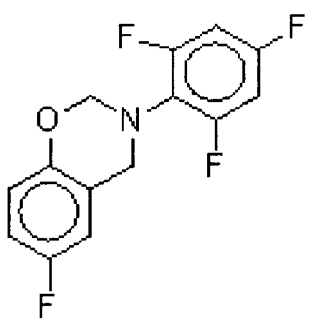

4FPh-2,4,6-TFA

<Formula 13>

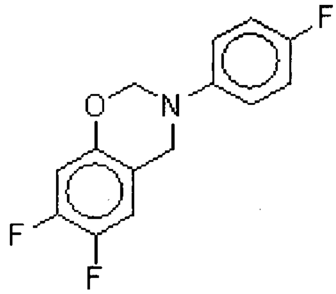

3,4-DFPh-4FA

<Formula 14>

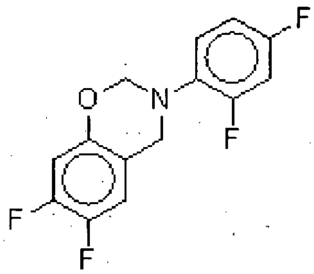

<Formula 15>

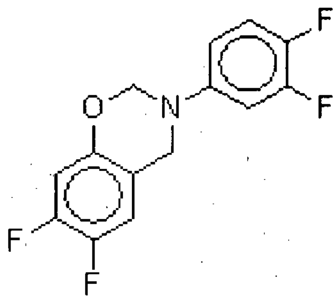

<Formula 16>

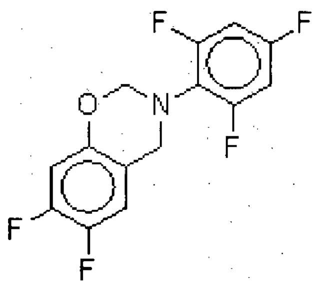

<Formula 17>

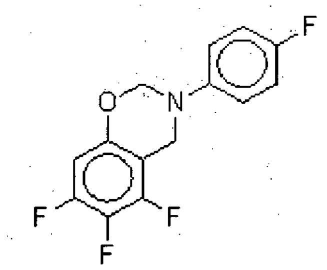

<Formula 18>

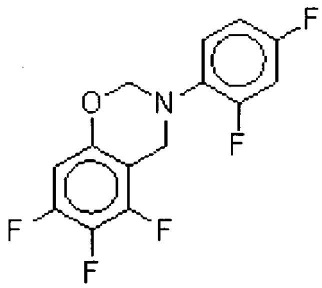

<Formula 19>

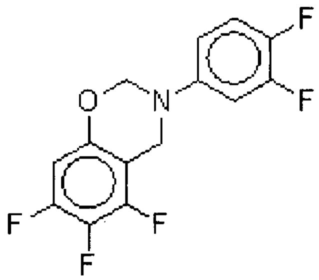

<Formula 20>

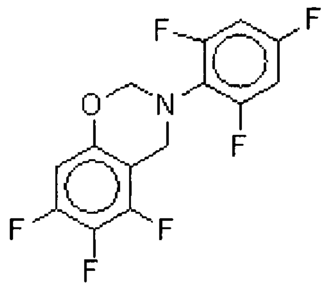

<Formula 21>

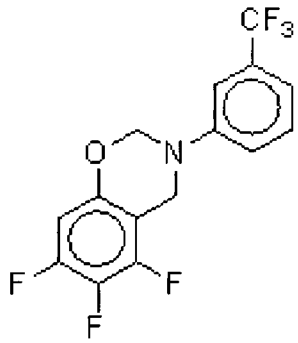

The compound of Formula 4 may be one selected from compounds represented by Formulae 22 through 26 below:

<Formula 22>

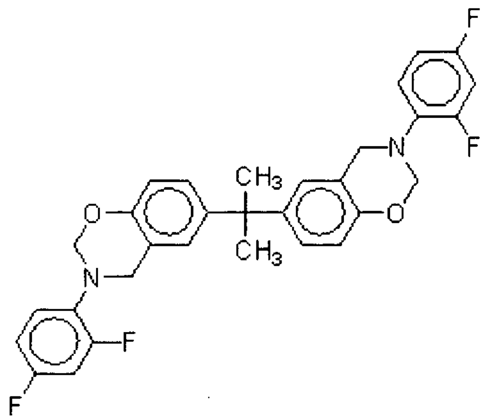

<Formula 23>

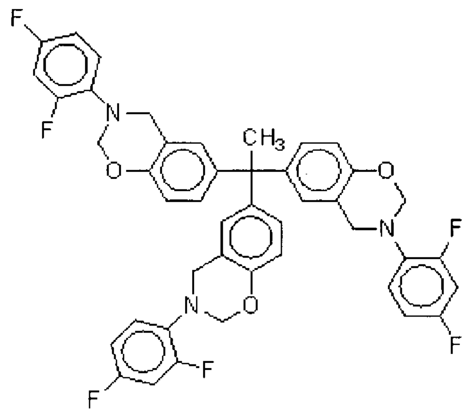

<Formula 24>

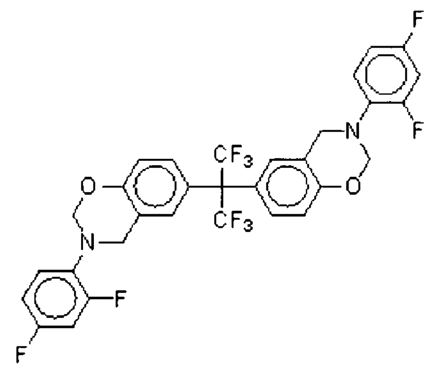

<Formula 25>

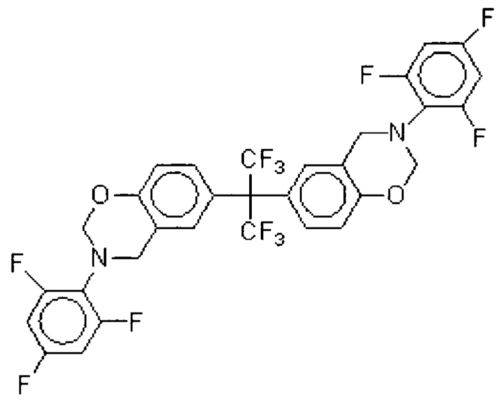

HFIDPh-2,4,6-TFA

<Formula 26>

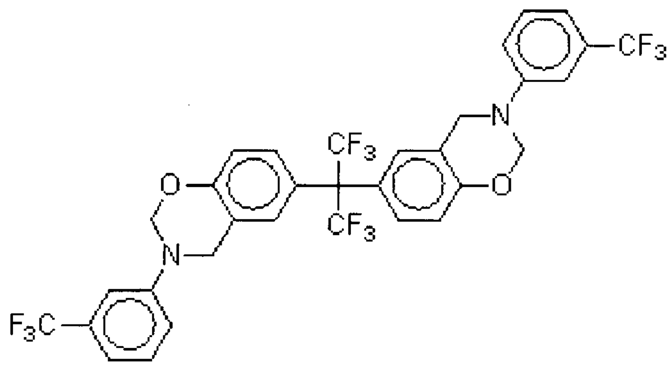

FIG. 3 shows a fuel cell 10 including an electrode 12, according to aspects of present invention. The electrode 12 includes a surface coating. The surface coating includes a catalyst in addition to at least one of the first benzoxazine monomer of Formula 1, the second benzoxazine monomer of Formula 2, or a combination thereof. The first and second benzoxazine monomers can be present as homopolymers and/or copolymers.

At least one selected from the group consisting of: the first benzoxazine monomer of Formula 1 and the second benzoxazine monomer of Formula 2; a polymer thereof; and a mixture thereof, is a material enhancing the wettability of the electrode with phosphoric acid, and a content thereof may be from about 0.001 to 0.5 parts by weight, based on 1 part by weight of the catalyst. If the content of at least one selected from the group consisting of the first benzoxazine monomer of Formula 1 and the second benzoxazine monomer of Formula 2, a polymer thereof, and a mixture thereof, is out of the range, an improvement in the wettability of the electrode with phosphoric acid may be insufficient.

A first benzoxazine monomer of Formula 1 can be synthesized by reacting a phenol containing various substituents, an amine, and a p-formaldehyde according to a Reaction Scheme 1 below. The reaction conditions are not

particularly limited. According to an exemplary embodiment of the present invention, the reaction may be performed using a melt process in the absence of a solvent. The reaction temperature may be from about 80 to 100°C, but can be varied, according to the particular substituents used.

<Reaction Scheme 1>

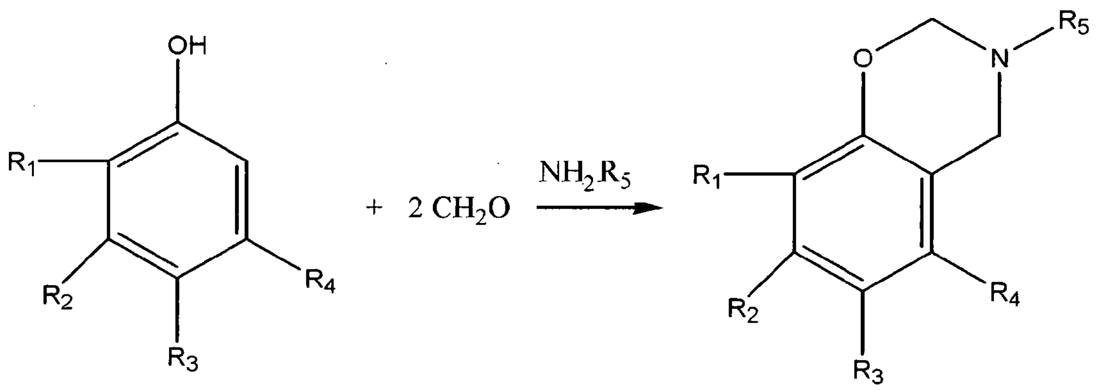


wherein $R_1$ through $R_5$ are as defined in Formula 1.

The second benzoxazine monomer of Formula 2 can be synthesized in a similar manner to the first benzoxazine monomer of Formula 1. The catalyst may be platinum (Pt) alone or an alloy of platinum and at least one selected from the group consisting of gold, palladium, rhodium, iridium, ruthenium, tin, molybdenum, cobalt, and chromium.

An electrode, according to aspects of the present invention, may further include a binder. The binder may be at least one selected from the group consisting of poly(vinylidenefluoride), polytetrafluoroethylene, a tetrafluoroethylene-hexafluoroethylene copolymer, and perfluoroethylene. The content of the binder may be from about 0.001 to 0.5 parts by weight, based on 1 part by weight of the catalyst. If the content of the binder is less than about 0.001 parts by weight, an improvement in the wettability of the electrode with phosphoric acid may be insufficient. If the content of the binder exceeds about 0.5 parts by weight, flooding of phosphoric acid may occur.

A method of manufacturing an electrode for a fuel cell as described above will now be described. First, a catalyst is dispersed in a solvent to obtain a dispersion solution. The dispersion solution can be a colloid. The solvent may be N-methylpyrrolidone (NMP), dimethylacetamide (DMAc), or the like. The content of the solvent may be from about 1 to 10 parts by weight, based on 1 part by weight of the catalyst.

A mixture containing a solvent and at least one of a first benzoxazine monomer of Formula 1 and a second benzoxazine monomer of Formula 2, is added to the dispersion solution and stirred, to obtain a coating solution. A binder may be further added to the coating solution.

The solvent may be NMP, DMAc, or the like. The content of at least one of the first benzoxazine monomer of Formula 1 and the second benzoxazine monomer of Formula 2, may be from about 0.001 to 0.5 parts by weight, based on 1 part by weight of the catalyst. The content of the binder may be from about 0.001 to 0.1 parts by weight, based on 1 part by weight of the catalyst.

The coating solution is coated on a surface of a carbon support, to complete an electrode. Here, for easy coating, the carbon support may be fixedly placed on a glass substrate. The coating method is not particularly limited, but may be doctor blade coating, bar coating, screen printing, or the like.

After coating the coating solution on the surface of the carbon support, the resultant structure is dried at a temperature of from about 20 to 150°C, to remove the solvent. The drying time varies according to the drying temperature, but may be from about 10 to 60 minutes. For example, the drying may be performed at room temperature for one hour, at 60°C for 15 minutes or more, at 80°C for 10 minutes or more, and at 120°C for 10 minutes or more.

An electrode for a fuel cell, according to aspects of the present invention, contains at least one of a first benzoxazine monomer of Formula 1 and a second benzoxazine monomer of Formula 2, a polymer thereof, or a mixture thereof. A polymer is obtained through a polymerization reaction that occurs when a fuel cell is operated at an operating temperature of about 150 °C.

A method of manufacturing a fuel cell using an electrode, according to an exemplary embodiment of the present invention, will now be described. An electrolyte membrane that can be used herein is not limited, provided that it is an electrolyte membrane commonly used in fuel cells. For example, a polybenzimidazole electrolyte membrane, a polybenzoxazine-polybenzimidazole copolymer electrolyte membrane, a PTFE porous membrane, or the like may be used.

According to an exemplary embodiment of the present invention, an electrolyte membrane may contain a crosslinked material of a polybenzoxazine compound, which is a polymerization product between a crosslinkable compound and one selected from a third benzoxazine monomer represented by Formula 27 below and a fourth benzoxazine

monomer represented by Formula 28 below:

<Formula 27>

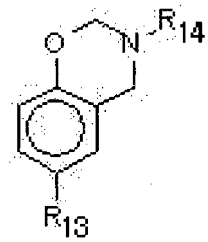

In Formula 27:

$R_{13}$ is hydrogen, a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C2-C20 heteroaryl group, a substituted or unsubstituted C4-C20 cycloalkyl group, a substituted or unsubstituted C2-C20 heterocyclic group, a halogen atom, a hydroxy group, or a cyano group; and

$R_{14}$ is a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, or a substituted or unsubstituted C2-C20 heterocyclic alkyl group.

<Formula 28>

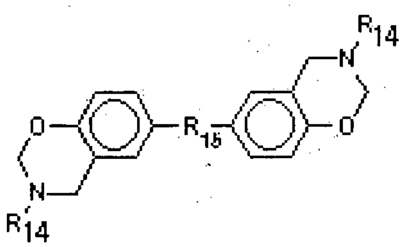

In Formula 28:

$R_{14}$ is a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, or a substituted or unsubstituted C2-C20 heterocyclic alkyl group; and

$R_{15}$ is selected from the group consisting of a substituted or unsubstituted C1-C20 alkylene group, a substituted or unsubstituted C2-C20 alkenylene group, a substituted or unsubstituted C2-C20 alkynylene group, a substituted or unsubstituted C6-C20 arylene group, a substituted or unsubstituted C2-C20 heteroarylene group, -C(=O)-, and $-SO_2-$.

The compound of Formula 27 may be selected from compounds represented by Formulae 29 through 38 below:

<Formula 29>

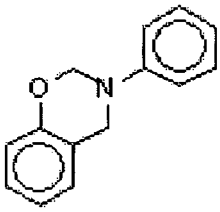

<Formula 30>

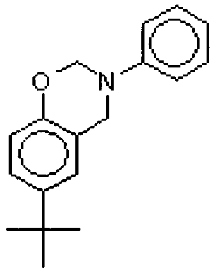

<Formula 31>

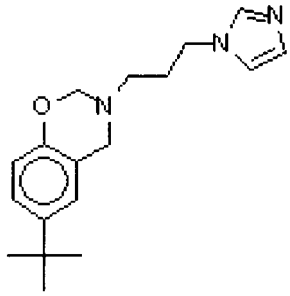

<Formula 32>

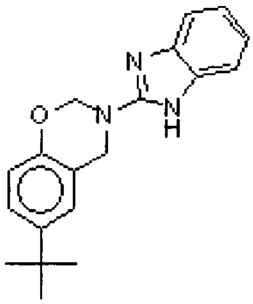

<Formula 33>

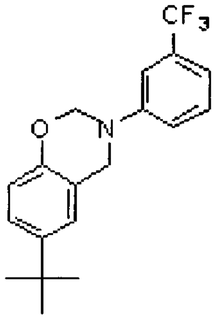

<Formula 34>

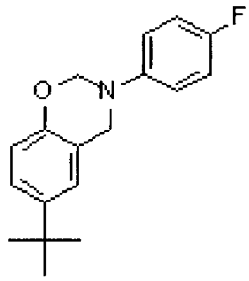

<Formula 35>

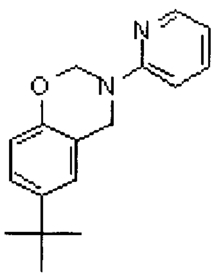

<Formula 36>

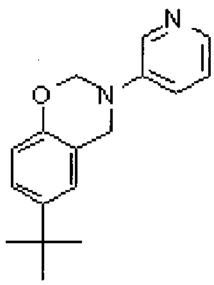

<Formula 37>

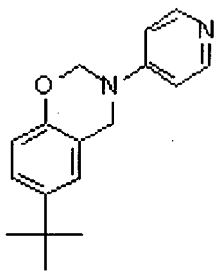

<Formula 38>

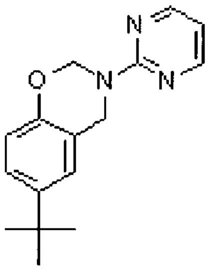

The fourth benzoxazine monomer of Formula 28 may be selected from compounds represented by Formulae 39 through 43 below:

<Formula 39>

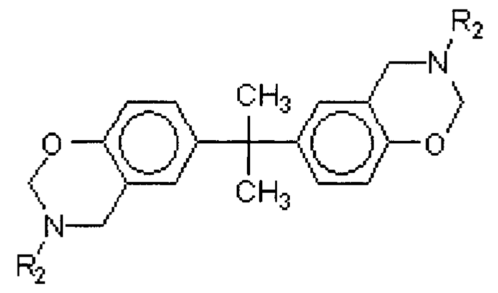

<Formula 40>

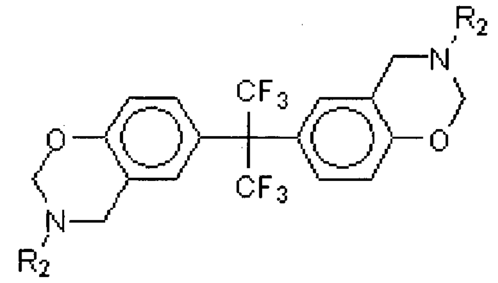

<Formula 41>

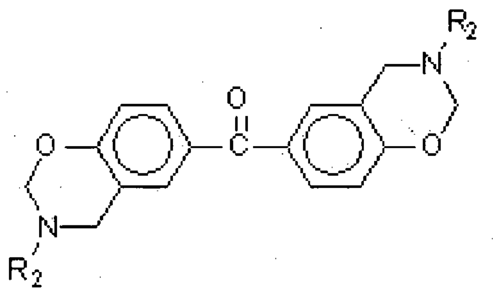

<Formula 42>

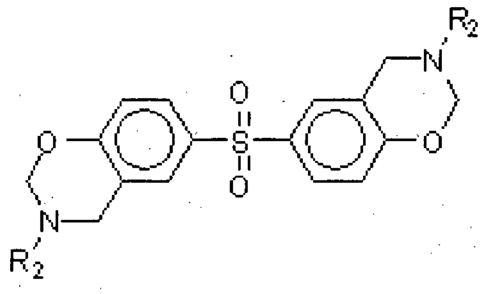

<Formula 43>

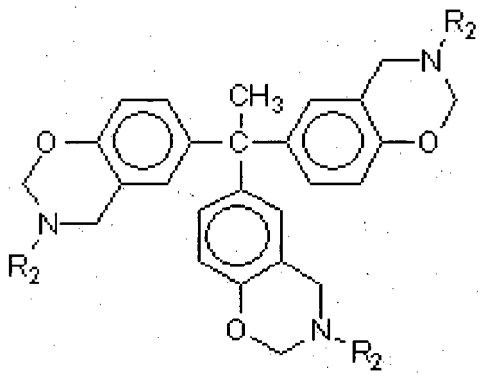

In Formulae 39 through 43, $R_2$ is $-CH_2-CH=CH_2$, or a group selected from groups represented by one of the following formulae:

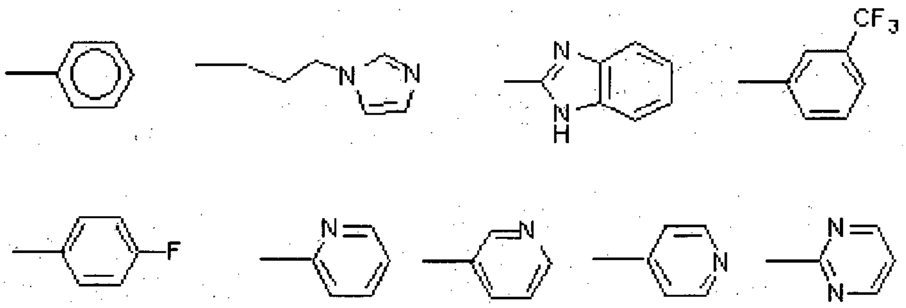

Examples of the crosslinkable compound include, but are not limited to, polybenzimidazoles (PBI), polybenzthiazoles, polybenzoxazoles, and polyimides.

A third benzoxazine monomer of Formula 27, a fourth benzoxazine monomer of Formula 28, and the crosslinkable compound are mixed in a predetermined ratio. Here, the content of the crosslinkable compound may be from about 5 to 95 parts by weight, based on 100 parts by weight of a third benzoxazine monomer of Formula 27 and a fourth benzoxazine monomer of Formula 28.

If the content of the crosslinkable compound is less than about 5 parts by weight, phosphoric acid impregnation may not occur, and a reduced proton conductivity may result. If the content of the crosslinkable compound exceeds about 95 parts by weight, the crosslinked material may be dissolved in polyphosphoric acid, due to a presence of excess phosphoric acid, and may thereby cause gas permeation.

Methods of manufacturing an electrolyte membrane using polybenzimidazole as a crosslinkable compound will now be described.

According to a first method, one of a third benzoxazine monomer of Formula 27 or a fourth benzoxazine monomer of Formula 28, is blended with a crosslinkable compound (e.g., PBI). The resultant blend is cured at about 50 to 250°C, and in particular at about 80 to 220°C, and impregnated with a proton conductor (e.g., an acid), to form an electrolyte membrane.

According to a second method, an electrolyte membrane is formed using a mixture containing one of a third benzoxazine monomer of Formula 27 or a fourth benzoxazine monomer of Formula 28, and a crosslinkable compound (e.g., PBI).

A film formation process for an electrolyte membrane may be performed using tape casting or common coating. For example, when using a coating process, a blend or mixture as described above is cast on a support using a doctor blade. Here, a doctor blade with a gap of from about 250 - 500 μm may be used.

When forming a film for an electrolyte membrane, by casting using a doctor blade, a separation of the film from a support may be further performed between a curing process and an acid impregnation process. The support on which the film is cast may be immersed in distilled water have a temperature of about 60 to 80°C. The support is not limited, provided that it can support an electrolyte membrane. The support may be a glass substrate, a polyimide film, or the like.

When using a tape casting process, a tape-cast film is separated from a support (e.g., a polyethyleneterephthalate film) before curing and then introduced into an oven, to cure the film. Thus, a support removal process after curing as described above is not required.

When a film for an electrolyte membrane is formed by a tape casting process using a mixture of a benzoxazine monomer and polybenzimidazole, filtration of the mixture may be further performed. The thus-formed film is cured by a heat treatment and impregnated with a proton conductor (e.g., an acid), to complete an electrolyte membrane. Examples of the proton conductor include, but are not limited to, phosphoric acid and a C1-C10 alkylphosphoric acid. The C1-C10 alkylphosphoric acid may be ethylphosphonic acid.

The content of the proton conductor may be from about 300 to 1,000 parts by weight, based on the total weight (100 parts by weight) of the electrolyte membrane. The concentration of the acid is not particularly limited. However, when using a phosphoric acid, an 85 wt% phosphoric acid solution may be used. The impregnation time of the phosphoric acid may be from about 2.5 to 14 hours at about 80°C.

The electrolyte membrane may be used as a hydrogen ion conducting film of a fuel cell. A method of manufacturing a Membrane Electrode Assembly (MEA), for a fuel cell using such an electrolyte membrane, will now be described. As used herein, the term "MEA" refers to a structure where an electrode having a catalyst layer and a diffusion layer is disposed on both surfaces of an electrolyte membrane.

According to an exemplary embodiment of the present invention, in order to manufacture an MEA, electrodes having catalyst layers as described above are respectively disposed on both surfaces of an electrolyte membrane obtained as described above, and incubated under high temperature and high pressure conditions. The electrodes are thereby adhered to both surfaces of the electrolyte membrane, and fuel diffusion layers are then adhered to the electrodes.

The electrodes and the electrolyte membrane are heated to a temperature such that the electrolyte membrane is softened, for adhesion of the membrane. In this state, the structure is pressed under a pressure of about 0.1 to 3 ton/$cm^2$, and in particular, at about 1 ton/$cm^2$. Bipolar plates are positioned on both sides of the MEA to complete a fuel cell. The bipolar plates can have grooves for fuel supply and can serve as current collectors.

The applications of a fuel cell according to the present invention are not limited. However, a fuel cell may be used as a polymer electrolyte membrane fuel cell.

Definition of substituents used herein will now be described. In the formulae used herein, examples of the unsubstituted C1-C20 alkyl group include methyl, ethyl, propyl, isobutyl, sec-butyl, pentyl, iso-amyl, and hexyl. At least one hydrogen atom of the alkyl group may be substituted by a halogen atom, a halogen atom-substituted C1-C20 alkyl group (e.g.,: $CCF_3$, $CHCF_2$, $CH_2F$, $CCl_3$, etc.), a hydroxy group, a nitro group, a cyano group, an amino group, an amidino group, hydrazine, hydrazone, a carboxyl group or its salt, a sulfonyl group or its salt, a phosphonyl group or its salt, a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, or a C6-C20 heteroarylalkyl group.

Examples of unsubstituted C2-C20 alkenyl groups include vinylene and allylene. At least one hydrogen atom of the alkenyl group may be substituted by the same substituents as those recited in the above definition of the alkyl group. The unsubstituted C2-C20 alkynyl group may be acetylene, etc. At least one hydrogen atom of the alkynyl groups may be substituted by the same substituents as those recited in the above definition of the alkyl group.

Examples of unsubstituted C1-C20 alkylene groups include methylene, ethylene, propylene, isobutylene, sec-butylene, pentylene, iso-amylene, and hexylene. At least one hydrogen atom of the alkylene groups may be substituted by the same substituents as those recited in the above definition of the alkyl group.

The unsubstituted C2-C20 alkenylene groups may be an allyl group, etc. At least one hydrogen atom of the alkenylene group may be substituted by the same substituents as those recited in the above definition of the alkyl group. The unsubstituted C2-C20 alkynylene groups may be an acetylene group, etc. At least one hydrogen atom of the alkynylene group may be substituted by the same substituents as recited in the above definition of the alkyl group.

The aryl group used herein, which can be used alone or in combination, refers to a carbocyclic aromatic system of 6-20 carbon atoms containing one or more rings. The rings may be attached to each other as a pendant group or may be fused. The term "aryl" refers to an aromatic radical such as phenyl, naphthyl, and tetrahydronaphthyl. The aryl group may have a substituent such as a haloalkylene, a nitro, a cyano, an alkoxy, or a lower alkylamino. At least one hydrogen atom of the aryl group may be substituted by the same substituents as recited in the above definition of the alkyl group.

The arylene group, which is used alone or in combination, refers to a carbocyclic aromatic system of 6-20 carbon atoms containing one or more rings. The rings may be attached to each other as a pendant group or may be fused. The term "arylene" refers to an aromatic radical such as a phenylene, a naphthylene, and a tetrahydronaphthylene. The arylene group may have a substituent, such as, a haloalkylene, a nitro, a cyano, an alkoxy, or a lower alkylamino. At least one hydrogen atom of the arylene group may be substituted by the same substituents as recited in the above definition of the alkyl group.

The arylalkyl group used herein refers to an aryl group as defined above, whose hydrogen atoms are partially substituted by a lower alkyl radical, e.g., a methyl, an ethyl, or a propyl. The arylalkyl group may be benzyl, phenylethyl, etc. At least one hydrogen atom of the arylalkyl group may be substituted by the same substituents as recited in the above definition of the alkyl group.

The heteroaryl group used herein refers to a monovalent monocyclic or a bicyclic aromatic compound of 1-20 carbon atoms, containing one, two, or three heteroatoms selected from N, O, P, and S. At least one hydrogen atom of the heteroaryl group may be substituted by the same substituents as recited in the above definition of the alkyl group.

The heteroarylene group used herein refers to a monovalent monocyclic or a bicyclic aromatic compound of 1-20 carbon atoms, containing one, two, or three heteroatoms selected from N, O, P, and S. At least one hydrogen atom of the heteroarylene group may be substituted by the same substituents as recited in the above definition of the alkyl group.

The heteroarylalkyl group used herein refers to a heteroaryl group as defined above having hydrogen atoms that are partially substituted by an alkyl group. At least one hydrogen atom of the heteroarylalkyl group may be substituted by the same substituents as recited in the above definition of the alkyl group.

The carbocyclic group used herein refers to a cyclic group having 5-10 carbon atoms, similar to a cyclohexyl group. At least one hydrogen atom of the carbocyclic group may be substituted by the same substituents as recited in the above definition of the alkyl group.

The carbocyclicalkyl group used herein refers to a carbocyclic group as defined above, having hydrogen atoms that are partially substituted by an alkyl group. At least one hydrogen atom of the carbocyclicalkyl group may be substituted by the same substituents as recited in the above definition of the alkyl group.

The heterocyclic group used herein refers to a cyclic group of 5-20 carbon atoms containing a heteroatom, such as, N, S, P, or O. At least one hydrogen atom of the heterocyclic group may be substituted by the same substituents as recited in the above definition of the alkyl group.

The heterocyclicalkyl group used herein refers to a heterocyclic group as defined above, having hydrogen atoms that are partially substituted by an alkyl group. At least one hydrogen atom of the heterocyclicalkyl group may be substituted by the same substituents as recited in the above definition of the alkyl group.

Hereinafter, aspects of the present invention will be described more specifically, with reference to the following working examples. The following working examples are for illustrative purposes only and are not intended to limit the scope of the invention.

Example 1: manufacture of electrodes for fuel cells and fuel cells employing the electrodes

1g of a PtCo(TEC36E52) catalyst (50 wt% on carbon) and 3g of NMP used as a solvent were introduced into a stirring vessel. The reaction mixture was stirred using a mortar to make a slurry. A 10 wt% solution of a compound of Formula 13 (3,4-DFPh-4FA) in NMP was added to the slurry, to produce 0.026 g of a compound of Formula 13 was, followed by stirring.

Next, a solution of 5 wt% of a vinylidenefluoride-co-hexafluoropropylene copolymer, in NMP was added to the mixture, to produce 0.026 g of the vinylidenefluoride-co-hexafluoropropylene copolymer, followed by mixing for 10 minutes, to make slurries for cathode catalyst layers.

Carbon papers were cut into 4×7 $cm^2$ pieces and fixed on glass plates.

The slurries for the cathode catalyst layers were coated on the carbon papers, using a doctor blade (Sheen Instrument) with a gap of 600 μm, and dried at room temperature for one hour, at 80°C for one hour, at 120°C for 30 minutes, and at 150°C for 15 minutes to form cathodes (fuel electrodes). The loading amount of PtCo in the cathodes was 3.0 mg/$cm^2$.

Anodes were manufactured as follows. 2g of a Pt catalyst (50 wt% on carbon) and 9g of NMP (used as a solvent) were introduced into a stirring vessel. The reaction mixture was stirred using a high-speed stirrer for two minutes. Then, a solution of 0.005 g of polyvinylidenefluoride in 1 g of NMP was added to the reaction solution, followed by stirring for two minutes, to make slurries for anode catalyst layers. The slurries for the anode catalyst layers were coated on carbon papers having microporous layers, using a bar coater. The loading amount of platinum in anodes was 1.4 mg/$cm^2$.

Meanwhile, 65 parts by weight of a benzoxazine monomer of Formula 27 and 35 parts by weight of polybenzimidazole were blended, and the blend was cured at 80 to 220°C. Then, the cured product was impregnated with 85 wt% phosphoric acid, at 80°C for about four hours to form electrolyte membranes. Here, the content of the phosphoric acid was about 500 parts by weight, based on the total weight (100 parts by weight) of each electrolyte membrane.

The electrolyte membranes were inserted between the cathodes and the anodes to manufacture MEAs. Here, the cathodes and the anodes were not impregnated with phosphoric acid.

In order to prevent gas permeation between the cathodes and the anodes, a stack of a 200 μm Teflon film, used as a major gasket, and a 20μm Teflon film, used as a sub-gasket, were disposed at an interface between each electrode and each electrolyte membrane. The pressure applied to the MEAs was adjusted using a torque wrench, and was increased in a stepwise fashion, using 1, 2, and 3 N-m Torque wrenches.

Electric power was produced at 150°C, under non-humidified electrolyte membrane conditions, by passing hydrogen (flow rate: 100 ccm) through the anodes and air (flow rate: 250 ccm) through the cathodes. The cell characteristics were then evaluated. Since the phosphoric acid-doped electrolyte membranes were used, the performance of the fuel cells was enhanced over time. The cell characteristics were evaluated after aging, until an operating voltage reached a peak value. The area of each of the cathodes and the anodes was set to 2.8×2.8=7.84 $cm^2$. The cathodes were about 430 μm thick and the anodes were about 390 μm thick.

Example 2: manufacture of electrodes for fuel cells and fuel cells employing the electrodes

Fuel cells were manufactured in the same manner as in Example 1, except that the 4FPh-2,4,6-TFA of Formula 12 was used, instead of the 3,4-DFPh-4FA of Formula 13, to manufacture cathodes. Here, the loading amount of PtCo in each of the cathodes was 2.5 mg/$cm^2$.

Example 3: manufacture of electrodes for fuel cells and fuel cells employing the electrodes

Fuel cells were manufactured in the same manner as in Example 1, except that the HFIDPh-2,4,6-TFA of Formula 25 was used, instead of the 3,4-DFPh-4FA of Formula 13, to manufacture cathodes. Here, the loading amount of PtCo in each of the cathodes was 2.5 mg/$cm^2$.

Example 4: manufacture of electrodes for fuel cells and fuel cells employing the electrodes

Fuel cells were manufactured in the same manner as in Example 1, except that the t-BuPh-4FA of Formula 5 was used, instead of 3,4-DFPh-4FA of Formula 13, to manufacture cathodes. Here, the loading amount of PtCo in each of the cathodes was 2.5 mg/$cm^2$.

Comparative Example 1: manufacture of electrodes for fuel cells and fuel cells employing the electrodes

Fuel cells were manufactured in the same manner as in Example 1, except that cathodes were manufactured in the absence of the 3,4-DFPh-4FA of Formula 13. The loading amount of PtCo in each of the cathodes was 3.0 mg/$cm^2$, and the loading amount of platinum in each of anodes was 1.4 mg/$cm^2$.

Comparative Example 2: manufacture of electrodes for fuel cells and fuel cells employing the electrodes

Fuel cells were manufactured in the same manner as in Example 1, except that cathodes were manufactured in the absence of the 3,4-DFPh-4FA of Formula 13, using polyvinylidenefluoride instead of a vinylidenefluoride-co-hexafluoropropylene copolymer. Here, the loading amount of PtCo in each of the cathodes was 3.0 mg/$cm^2$, and the loading amount of platinum in each of the anodes was 1.4 mg/$cm^2$.

In the fuel cells manufactured in Example 1 and Comparative Examples 1 and 2, a change in cell voltage, with respect to an operating time, was measured, and the results are illustrated in FIG. 1. Referring to FIG. 1, the voltage characteristics of the fuel cells manufactured in Example 1 were improved as compared to those of the fuel cells manufactured in Comparative Examples 1 and 2, over the same operating time.

In the fuel cells manufactured in Examples 1 and 2 and Comparative Example 1, a change in cell potential with respect to current density was measured, and the results are illustrated in FIG. 2. Referring to FIG. 2, the fuel cells manufactured in Examples 1 and 2 exhibited a better MEA performance than the fuel cells manufactured in Comparative Example 1. These results show that the use of an additive, to enhance the wettability of an electrode with phosphoric acid, enables a uniform distribution of phosphoric acid in micropores of the electrode, and thus, increases a gas-liquid-solid interfacial area, thereby enhancing cell performance.

Evaluation Example 1: evaluation of cell performance

In order to analyze the cause of performance improvement of the fuel cells, Tafel fitting was performed in a V-log I curve, to determine the slope and the y-intercept (see Equation 1 below). The y-intercept related to exchange current density increases in the presence of an additive. PBI reference electrodes and PTFE electrodes are distinctly different in the slope related to reaction mechanism, and thus, this difference in the slopes is indicative of a change in reaction mechanism.

<Equation 1>

Tafel intercept = f ($C_{O2}$)

$$\eta = \boxed{\frac{2.3RT}{\alpha nF}\log i_0} - \frac{2.3RT}{\alpha nF}\log i \qquad i_0 = nF\, c_{O2}^{*} k_{OC} \exp(-\alpha_c nF\, E_{ecbm}/RT)$$

According to Equation 1, the Tafel intercept is changed, according to the exchange current density $i_o$. Here, $i_o$ is determined by an oxygen concentration. When comparing the Tafel intercepts of additive-containing electrodes and additive-free electrodes, a change in oxygen concentration in the vicinity of a catalyst can be predicted.

In the fuel cells manufactured in Examples 1-4 and Comparative Example 1, Tafel fitting was performed and the results are summarized in Table 1 below.

Table 1

| | Active Pt area ($cm^2$Pt/ $cm^2$) | Tafel intercept I | $O_2$ over-voltage (mV) | Voltage at 0.3 A/ $cm^2$ (V) |
|---|---|---|---|---|
| Standard (Comparative Example 1) (2.5% PvDF-co-HFP) | 279 | 0.674 | 25 | 0.656 |
| 2.5% 3,5 DFPh-4FA 2.5% PvDF-co-HFP (Example 1) | 182 | 0.693 | 11 | 0.712 |
| 2.5% 4FPh-2,4,6-TFA 2.5% PvDF-co-HFP (Example 2) | 273 | 0.699 | 16 | 0.713 |
| 2.5% HFIDPh-2,4,6-TFA 2.5% PvDF-co-HFP (Example 3) | 486 | 0.688 | 22 | 0.705 |
| 2.5% t-BuPh-4FA 2.5% PvDF-co-HFP (Example 4) | 243 | 0.697 | 17 | 0.687 |

The percentage (%) in Table 1 refers to a wt% used to indicate the content of each component in a catalyst layer. Referring to Table 1, with respect to the y-intercepts of the Tafel lines, indicating an oxygen concentration near platinum, the y intercepts of the electrodes of the fuel cells of Examples 1-4 were higher than those of the reference

electrodes of the fuel cells of Comparative Example 1. With respect to an oxygen over-voltage, caused by resistance against oxygen migration, the oxygen over-voltages of the electrodes of the fuel cells of Examples 1-4 were lower than those of the reference electrodes of the fuel cells of Comparative Example 1.

These results show that an oxygen concentration increased in the electrodes of Examples 1-4, thereby resulting in a lower oxygen over-voltage and a higher oxygen reduction reaction, as compared to the electrodes of Comparative Example 1.

An electrode for a fuel cell, according to aspects of the present invention, contains fluorine or a fluorine-containing functional group. Thus, the electrode shows better oxygen permeability, even when air flows to a cathode, an enhancement in the wettability of the electrode with phosphoric acid ($H_3PO_4$), and excellent heat resistance. Therefore, a fuel cell employing the electrode can be operated under high temperature and non-humidified conditions and can improve power output performance.

Although a few embodiments of the present invention have been shown and described, it would be appreciated by those skilled in the art that changes may be made in this embodiment without departing from the principles of the invention, the scope of which is defined in the claims.

## Claims

1. An electrode for a fuel cell, the electrode comprising a catalyst layer comprising a catalyst and at least one selected from the group consisting of a first benzoxazine monomer represented by Formula 1 below, a second benzoxazine monomer represented by Formula 2 below, a a mixture thereof, a homopolymer consisting of the first benzoxazine monomer, a homopolymer consisting of the second benzoxazine monomer, and a copolymer consisting of the first and second benzoxazine monomers; wherein Formula 1 is

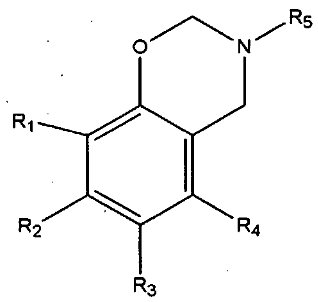

;

wherein Formula 2 is

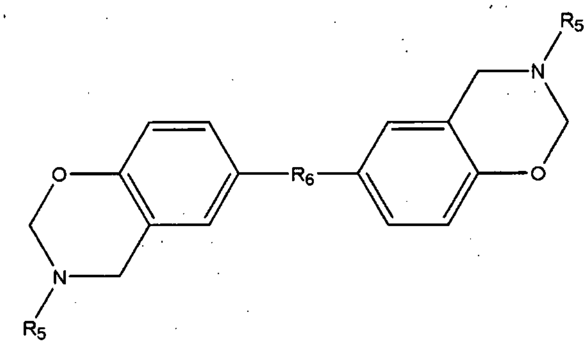

;

wherein:

$R_1$, $R_2$, $R_3$, and $R_4$ are each independently hydrogen, a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C2-C20 heteroaryl group, a substituted or unsubstituted C4-C20 cycloalkyl group, or a substituted or unsubstituted C2-C20 heterocyclic group, a halogen atom, a hydroxy group, and a cyano group;

$R_5$ is a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, and a substituted or unsubstituted C2-C20 heterocyclic alkyl group;
$R_6$ is selected from the group consisting of a substituted or unsubstituted C1-C20 alkylene group, a substituted or unsubstituted C2-C20 alkenylene group, a substituted or unsubstituted C2-C20 alkynylene group, a substituted or unsubstituted C6-C20 arylene group, a substituted or unsubstituted C2-C20 heteroarylene group, -C(=O)-, and $-SO_2-$; and

wherein in Formula 1, at least one of $R_1$, $R_2$, $R_3$, $R_4$, and $R_5$ is fluorine or a fluorine-containing functional group, and wherein in Formula 2, at least one of $R_5$ and $R_6$ is fluorine or a fluorine-containing functional group.

**2.** The electrode of claim 1, wherein in Formula 1, $R_1$, $R_2$, $R_3$, and $R_4$ are selected from the group consisting of a C1-C20 alkyl group, an allyl group, a C6-C20 aryl group, a C2-C20 alkenyl group, a C2-C20 alkynyl group, fluorine (F), a fluorinated C1-C20 alkyl group, and a fluorinated C6-C20 aryl group.

**3.** The electrode of claim 1 or 2, wherein in Formulae 1 and 2, $R_5$ is $-CH_2-CH=CH_2$, or one of groups represented by the following formulae:

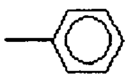
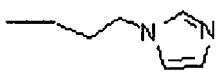
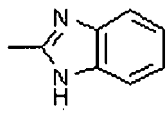
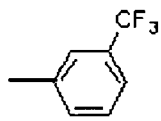

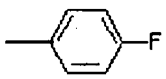
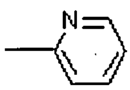
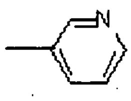
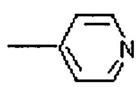
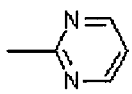

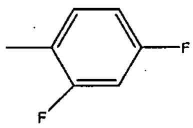
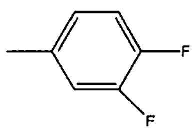

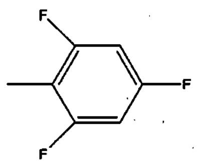
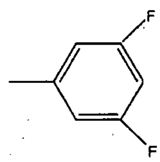

**4.** The electrode of any of claims 1-3, wherein in Formula 2, $R_6$ is selected from the group consisting of $-C(CH_3)_2-$, $-C(CF_3)_2-$, -C(=O)-, $-SO_2-$, $-CH_2-$, $-C(CCl_3)-$, $-CH(CH_3)-$,$-CH(CF_3)-$, and a group represented by the following structural formula:

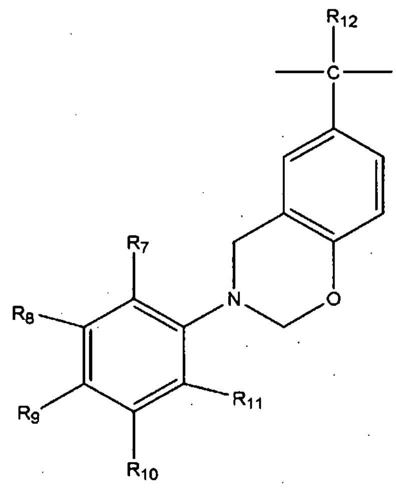

wherein,

$R_7$, $R_8$, $R_9$, $R_{10}$, and $R_{11}$ are each independently selected from the group consisting of hydrogen, a C1-C20 alkyl group, an allyl group, a C6-C20 aryl group, a t-butyl group, a C2-C20 alkenyl group, a C2-C20 alkynyl group, F, a fluorinated C1-C20 alkyl group, and a fluorinated C6-C20 aryl group, and
$R_{12}$ is selected from the group consisting of hydrogen, a methyl group, an ethyl group, a propyl group, F, $CHF_2$, $CH_2F$, and $CF_3$.

**5.** The electrode of claim 1, wherein the first benzoxazine monomer of Formula 1 is a compound represented by Formula 3 below:

<Formula 3>

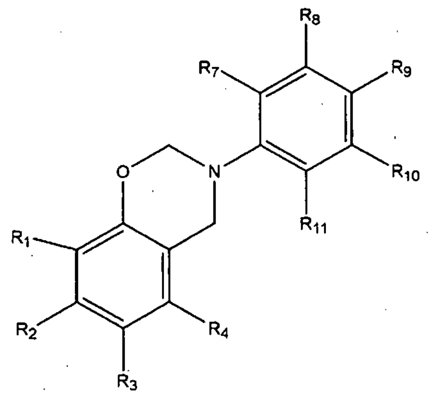

wherein,

$R_1$, $R_2$, $R_3$, and $R_4$ are each independently selected from the group consisting of hydrogen, F, $CHF_2$, $CH_2F$, $CF_3$, and a C1-C20 alkyl group,
$R_7$, $R_8$, $R_9$, $R_{10}$, and $R_{11}$ are each independently selected from the group consisting of hydrogen, F, $CHF_2$, $CH_2F$, $CF_3$, and a C1-C20 alkyl group, and

at least one of $R_1$, $R_2$, $R_3$, $R_4$, $R_7$, $R_8$, $R_9$, $R_{10}$, and $R_{11}$ is F, $CHF_2$, $CH_2F$, or $CF_3$.

**6.** The electrode of claim 5, wherein the compound of Formula 3 is one selected from compounds represented by Formulae 5 through 21 below:

<Formula 5>

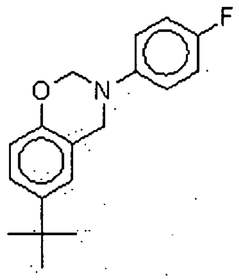

<Formula 6>

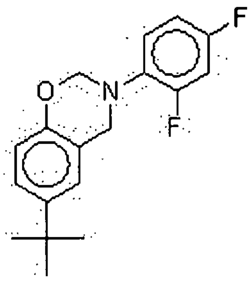

<Formula 7>

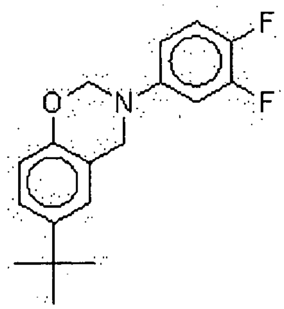

<Formula 8>

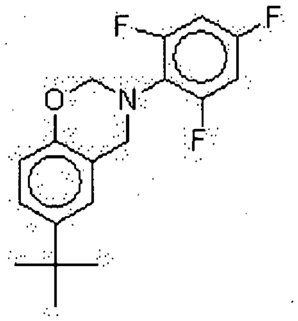

<Formula 9>

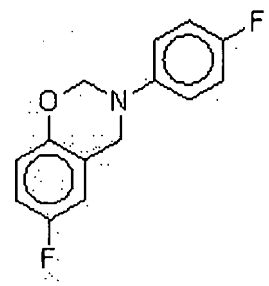

<Formula 10>

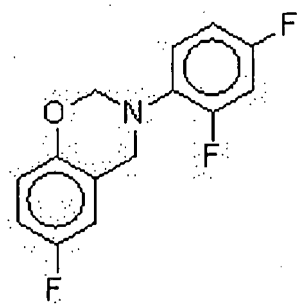

<Formula 11>

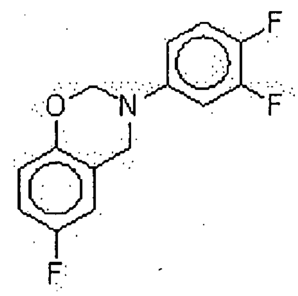

<Formula 12>

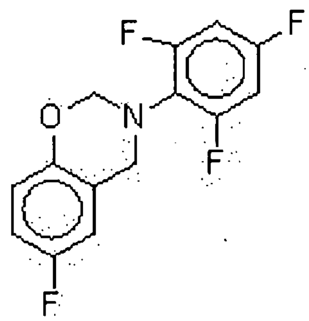

<Formula 13>

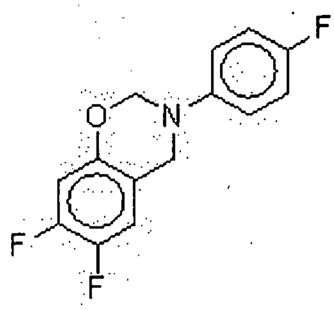

<Formula 14>

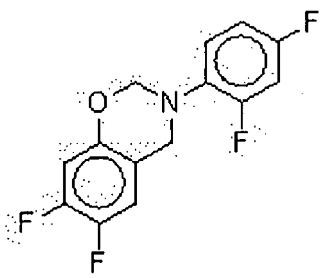

<Formula 15>

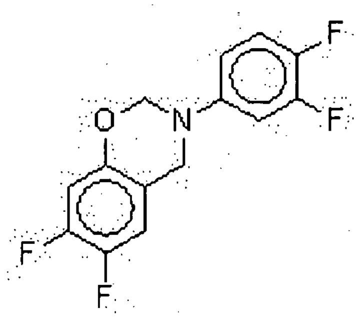

<Formula 16>

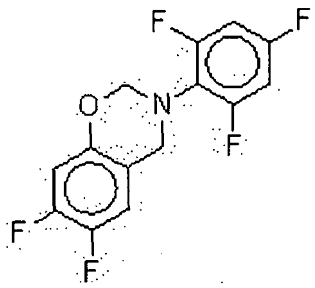

<Formula 17>

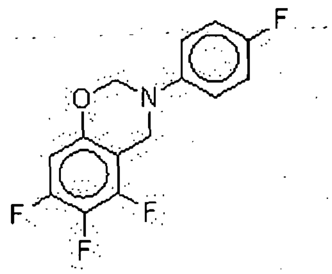

<Formula 18>

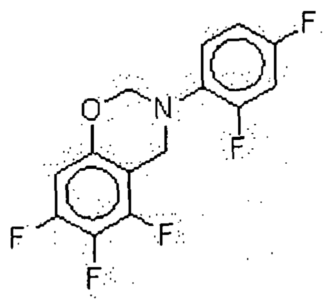

<Formula 19>

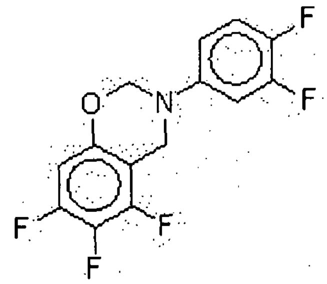

<Formula 20>

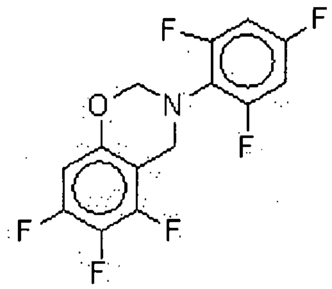

<Formula 21>

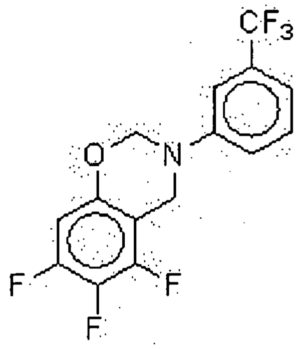

7. The electrode of claim 1 or 6, wherein the second benzoxazine monomer of Formula 2 is a compound represented by Formula 4 below:

<Formula 4>

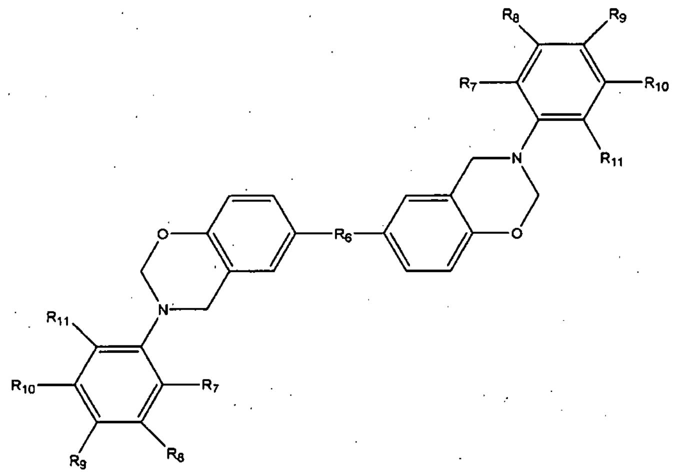

wherein,
$R_6$ is $-C(CH_3)_2-$, $CH_2$, $-C(CF_3)_2-$, $-C(CHF_2)_2-$, $-C(CH_2F)_2-$, or a group represented by the following structural formula:

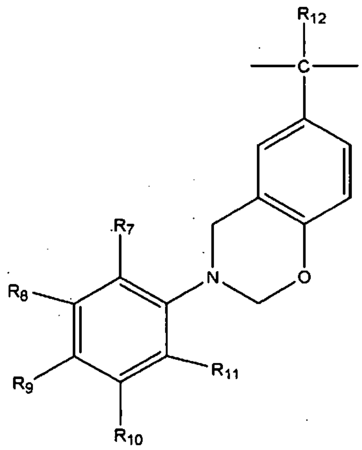

,

wherein:

$R_7$, $R_8$, $R_9$, $R_{10}$, and $R_{11}$ are each independently selected from the group consisting of hydrogen, a C1-C20 alkyl group, an allyl group, a C6-C20 aryl group, a t-butyl group, a C2-C20 alkenyl group, a C2-C20 alkynyl group, F, a fluorinated C1-C20 alkyl group, and a fluorinated C6-C20 aryl group;
$R_{12}$ is hydrogen, a methyl group, an ethyl group, a propyl group, F, $CHF_2$, $CH_2F$, or $CF_3$, and
one of $R_7$, $R_8$, $R_9$, $R_{10}$, and $R_{11}$ is F, $CHF_2$, $CH_2F$, or $CF_3$.

**8.** The electrode of claim 7, wherein the compound of Formula 4 is selected from compounds represented by Formulae 22 through 26 below:

<Formula 22>

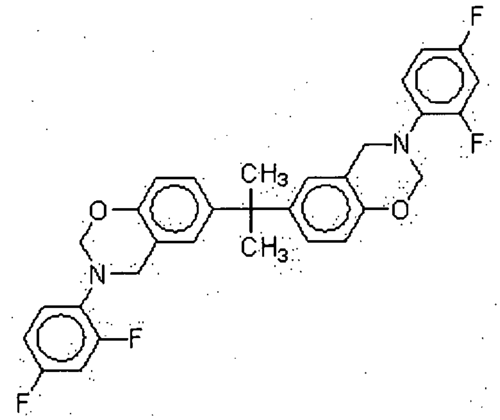

<Formula 23>

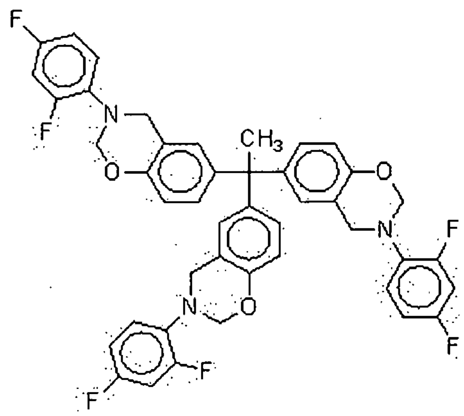

<Formula 24>

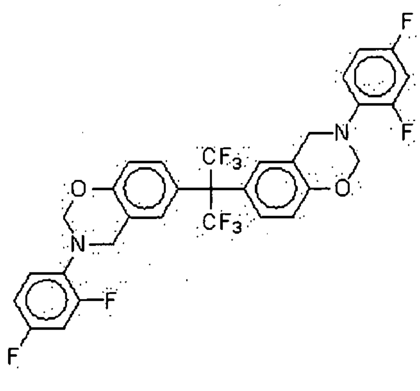

<Formula 25>

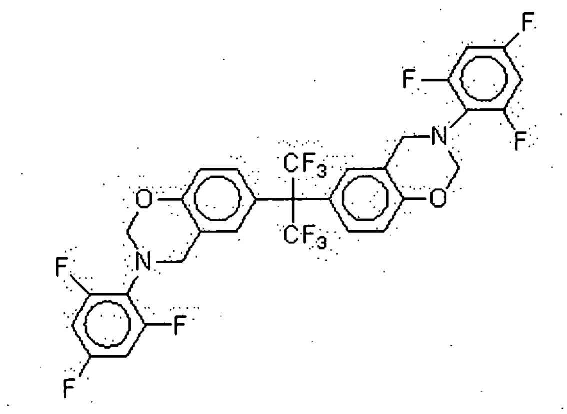

<Formula 26>

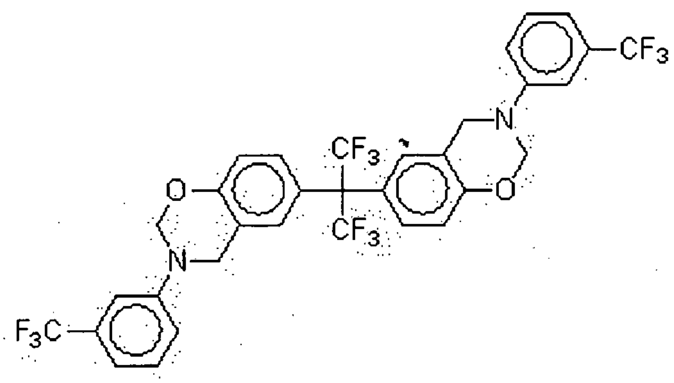

**9.** The electrode of any of claims 1-8, wherein the content of at least one selected from the group consisting of the first benzoxazine monomer of Formula 1, the second benzoxazine monomer of Formula 2, the mixture thereof, the homopolymer consisting of the first benzoxazine monomer, the homopolymer consisting of the second benzoxazine monomer, and the copolymer consisting of the first and second benzoxazine monomers, is between about 0.01 to 0.5 parts by weight, based on 1 part by weight of the catalyst.

**10.** The electrode of any of claims 1-9, wherein the catalyst is platinum (Pt) or an alloy comprising platinum and at least one selected from the group consisting of gold, palladium, rhodium, iridium, ruthenium, tin, molybdenum, cobalt, and chromium.

**11.** The electrode of any of claims 1-10, further comprising a binder.

**12.** The electrode of claim 11, wherein the binder is at least one selected from the group consisting of poly(vinylidenefluoride), polytetrafluoroethylene, a tetrafluoroethylene-hexafluoroethylene copolymer, and perfluoroethylene.

**13.** The electrode of claim 11 or 12, wherein the content of the binder is present at from about 0.001 to 0.5 parts by weight, based on 1 part by weight of the catalyst.

**14.** A method of manufacturing an electrode for a fuel cell, the method comprising:

dispersing a catalyst in a solvent to obtain a dispersion solution;
stirring a mixture comprising a solvent and at least one of a first benzoxazine monomer represented by Formula

1 below and a second benzoxazine monomer represented by Formula 2 below into the dispersion solution, to obtain a coating solution; and
coating the coating solution on a surface of a carbon support:

<Formula 1>

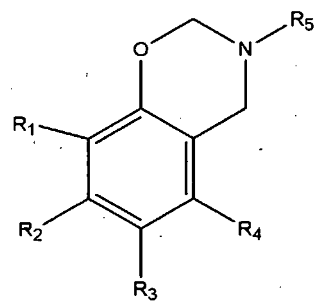

;

<Formula 2>

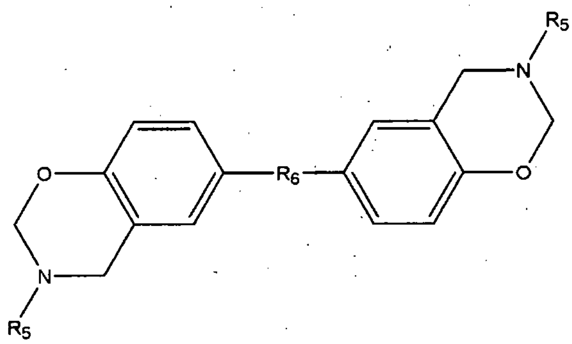

wherein:

$R_1$, $R_2$, $R_3$, and $R_4$ are each independently hydrogen, a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C2-C20 heteroaryl group, a substituted or unsubstituted C4-C20 cycloalkyl group, or a substituted or unsubstituted C2-C20 heterocyclic group, a halogen atom, a hydroxy group, or a cyano group;
$R_5$ is a substituted or unsubstituted C1-C20 alkyl group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C2-C20 heteroaryl group, a substituted or unsubstituted C2-C20 heteroarylalkyl group, a substituted or unsubstituted C4-C20 carbocyclic group, a substituted or unsubstituted C4-C20 carbocyclic alkyl group, a substituted or unsubstituted C2-C20 heterocyclic group, or a substituted or unsubstituted C2-C20 heterocyclic alkyl group;
$R_6$ is selected from the group consisting of a substituted or unsubstituted C1-C20 alkylene group, a substituted or unsubstituted C2-C20 alkenylene group, a substituted or unsubstituted C2-C20 alkynylene group, a substituted or unsubstituted C6-C20 arylene group, a substituted or unsubstituted C2-C20 heteroarylene group,-C(=O)-, and $-SO_2-$;

wherein in Formula 1, at least one of $R_1$, $R_2$, $R_3$, $R_4$, and $R_5$ is fluorine or a fluorine-containing functional group, and wherein in Formula 2, at least one selected from $R_5$ and $R_6$ is fluorine or a fluorine-containing functional group.

**15.** A fuel cell comprising an electrode according to any of claims 1-13.

**Patentansprüche**

1. Elektrode für eine Brennstoffzelle, die Elektrode umfassend eine Katalysatorschicht, umfassend einen Katalysator und mindestens einen Bestandteil ausgewählt aus der Gruppe bestehend aus einem ersten Benzoxazin-Monomer, repräsentiert durch nachfolgende Formel 1, einem zweiten Benzoxazin-Monomer, repräsentiert durch nachfolgende Formel 2, einer Mischung davon, einem Homopolymer bestehend aus dem ersten Benzoxazin-Monomer, einem Homopolymer bestehend aus dem zweiten Benzoxazin-Monomer, und einem Copolymer bestehend aus dem ersten und zweiten Benzoxazin-Monomer;
wobei Formel 1 wie folgt lautet

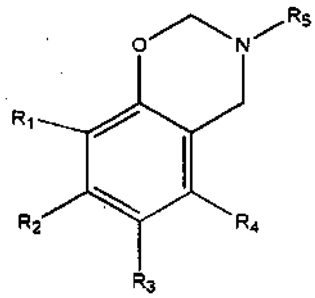

wobei Formel 2 wie folgt lautet

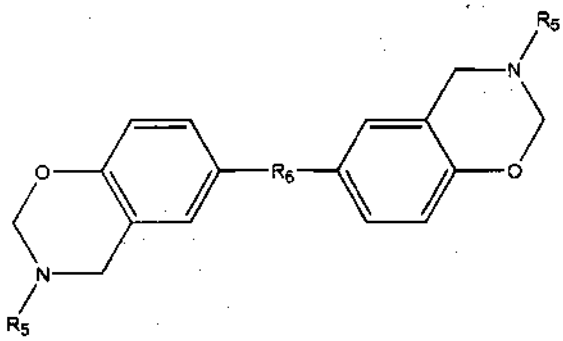

wobei:

$R_1$, $R_2$, $R_3$ und $R_4$ jeweils unabhängig voneinander Wasserstoff, eine substituierte oder unsubstituierte C1-C20-Alkylgruppe, eine substituierte oder unsubstituierte C2-C20-Alkenylgruppe, eine substituierte oder unsubstituierte C2-C20-Alkynylgruppe, eine substituierte oder unsubstituierte C6- C20-Arylgruppe, eine substituierte oder unsubstituierte C2-C20-Heteroarylgruppe, eine substituierte oder unsubstituierte C4-C20-Cycloalkylgruppe oder eine substituierte oder unsubstituierte C2-C20 heterocyclische Gruppe, ein Halogenatom, eine Hydroxygruppe und eine Cyanogruppe sind;
$R_5$ eine substituierte oder unsubstituierte C1-C20-Alkylgruppe, eine substituierte oder unsubstituierte C2-C20 Alkenylgruppe, eine substituierte oder unsubstituierte C2-C20-Alkynylgruppe, eine substituierte oder unsubstituierte C6-C20-Arylgruppe, eine substituierte oder unsubstituierte C7-C20-Arylalkylgruppe, eine substituierte oder unsubstituierte C2-C20-Heteroarylgruppe, eine substituierte oder unsubstituierte C2-C20-Heteroarylalkylgruppe, eine substituierte oder unsubstituierte C4-C20 carbocyclische Gruppe, eine substituierte oder unsubstituierte C4-C20 carbocyclische Alkylgruppe, eine substituierte oder unsubstituierte C2-C20 heterocyclische Gruppe und eine substituierte oder unsubstituierte C2-C20 heterocyclische Alkylgruppe ist;
$R_6$ aus der Gruppe bestehend aus einer substituierten oder unsubstituierten C1-C20-Alkylengruppe, einer substituierten oder unsubstituierten C2-C20 Alkenylengruppe, einer substituierten oder unsubstituierten C2-C20-Alkynylengruppe, einer substituierten oder unsubstituierten C6-C20-Arylengruppe, einer substituierten oder unsubstituierten C2-C20-Heteroarylengruppe, - C(=O)- und $-SO_2-$ ausgewählt wird; und

wobei in Formel 1 mindestens eines von $R_1$, $R_2$, $R_3$, $R_4$ und $R_5$ Fluor oder eine fluorhaltige Funktionsgruppe ist, und

wobei in Formel 2 mindestens eines von $R_5$ und $R_6$ Fluor oder eine fluorhaltige Funktionsgruppe ist.

**2.** Elektrode nach Anspruch 1, wobei in Formel 1 $R_1$, $R_2$, $R_3$, und $R_4$ aus der Gruppe bestehend aus einer C1-C20-Alkylgruppe, einer Allylgruppe, einer C6-C20-Arylgruppe, einer C2-C20-Alkenylgruppe, einer C2-C20-Alkynylgruppe, Fluor (F), einer fluorierten C1-C20-Alkylgruppe und einer fluorierten C6-C20-Arylgruppe ausgewählt werden.

**3.** Elektrode nach Anspruch 1 oder 2, wobei $R_5$ in den Formeln 1 und 2 $-CH_2-CH=CH_2$ oder eine der Gruppen, repräsentiert durch die folgenden Formeln, ist:

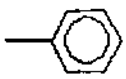
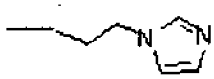
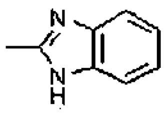
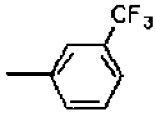

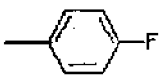
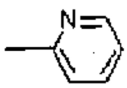
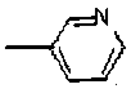
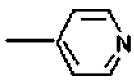
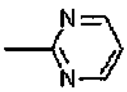

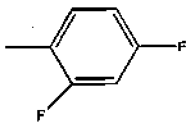
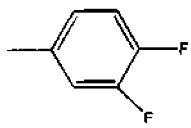

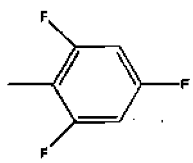
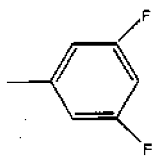

**4.** Elektrode nach einem der Ansprüche 1-3, wobei in Formel 2 $R_6$ aus der Gruppe bestehend aus $-C(CH_3)_2-$, $-C(CF_3)_2-$, $-C(=O)-$, $-SO_2-$, $-CH_2-$, $-C(CCl_3)-$, $-CH(CH_3)-$, $-CH(CF_3)-$ und einer Gruppe, repräsentiert durch die nachfolgende Strukturformel, ausgewählt wird:

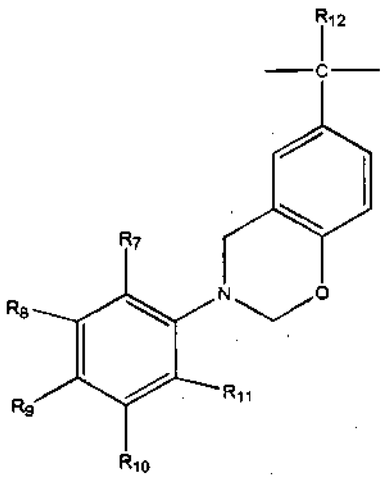

wobei

$R_7$, $R_8$, $R_9$, $R_{10}$ und $R_{11}$ jeweils unabhängig voneinander aus der Gruppe bestehend aus Wasserstoff, einer C1-C20-Alkylgruppe, einer Allylgruppe, einer C6-C20-Arylgruppe, einer t-Butylgruppe, einer C2-C20-Alkenylgruppe, einer C2-C20-Alkynylgruppe, F, einer fluorierten C1-C20-Alkylgruppe und einer fluorierten C6-C20-Arylgruppe ausgewählt werden, und

$R_{12}$ aus der Gruppe bestehend aus Wasserstoff, einer Methylgruppe, einer Ethylgruppe, einer Propylgruppe, F, $CHF_2$, $CH_2F$ und $CF_3$ ausgewählt wird.

**5.** Elektrode nach Anspruch 1, wobei das erste Benzoxazin-Monomer von Formel 1 eine Verbindung ist, die durch nachfolgende Formel 3 repräsentiert wird:

<Formel 3>

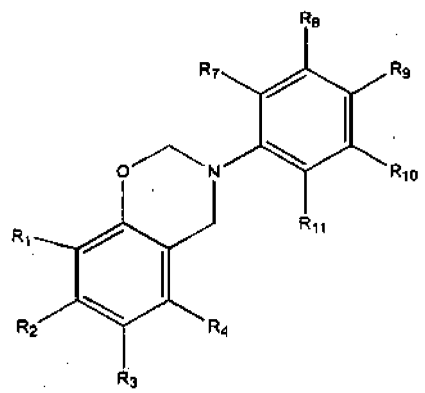

wobei

$R_1$, $R_2$, $R_3$- und $R_4$ einzeln unabhängig aus der Gruppe bestehend aus Wasserstoff, F, $CHF_2$, $CH_2F$, $CF_3$, und einer C1-C20 Alkylgruppe gewählt werden,

$R_7$, $R_8$, $R_9$, $R_{10}$, und $R_{11}$ einzeln unabhängig aus der Gruppe bestehend aus Wasserstoff, F, $CHF_2$, $CH_2F$, $CF_3$, und einer C1-C20 Alkylgruppe gewählt werden, und

mindestens eines von $R_1$, $R_2$, $R_3$, $R_4$, $R_7$, $R_8$, $R_9$, $R_{10}$ und $R_{11}$ F, $CHF_2$, $CH_2F$ oder $CF_3$ ist.

**6.** Elektrode nach Anspruch 5, wobei die Verbindung von Formel 3 eine aus den Verbindungen, repräsentiert durch die nachfolgenden Formeln 5 bis 21, ausgewählte Verbindung ist:

<Formel 5>

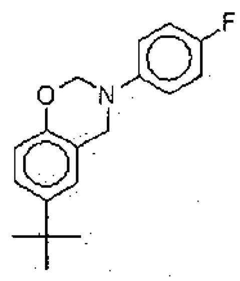

<Formel 6>

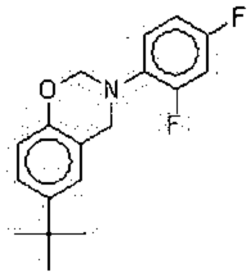

<Formel 7>

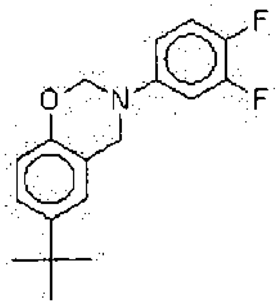

<Formel 8>

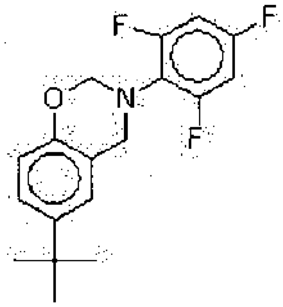

<Formel 9>

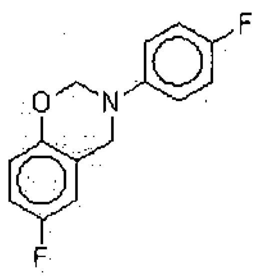

<Formel 10>

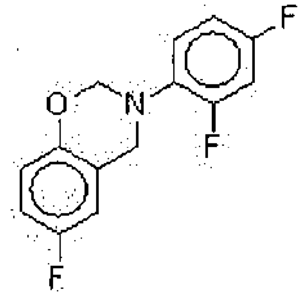

<Formel 11>

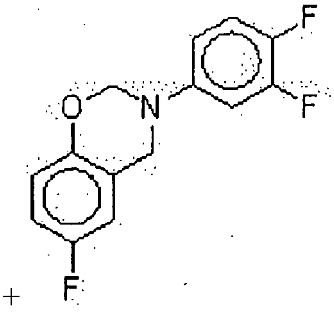

<Formel 12>

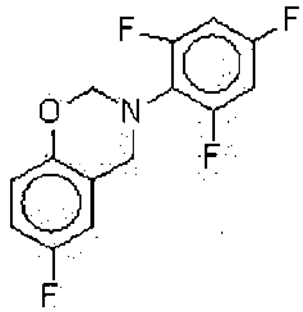

<Formel 13>

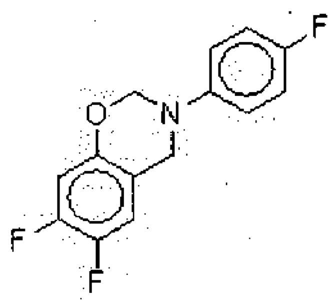

<Formel 14>

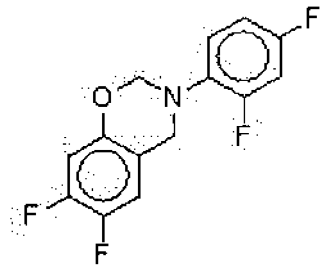

<Formel 15>

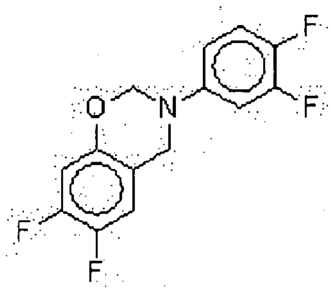

<Formel 16>

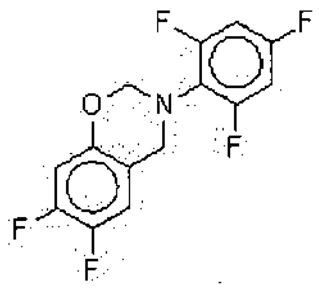

<Formel 17>

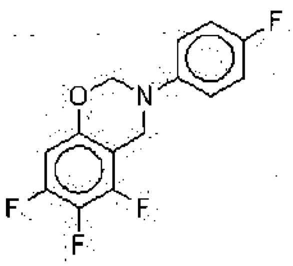

<Formel 18>

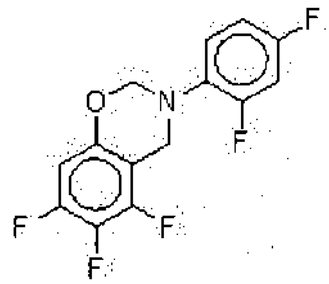

<Formel 19>

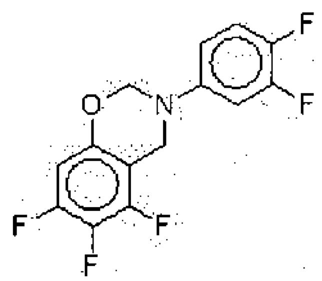

<Formel 20>

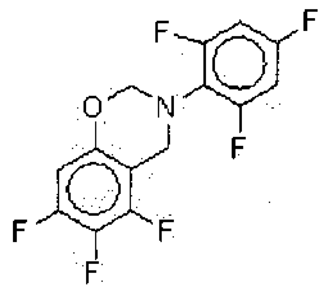

<Formel 21>

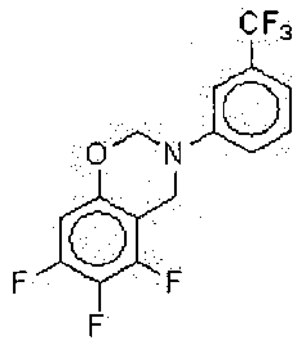

**7.** Elektrode nach Anspruch 1 oder 6, wobei das zweite Benzoxazin-Monomer von Formel 2 eine Verbindung ist, die

durch nachfolgende Formel 4 repräsentiert wird:

<Formel 4>

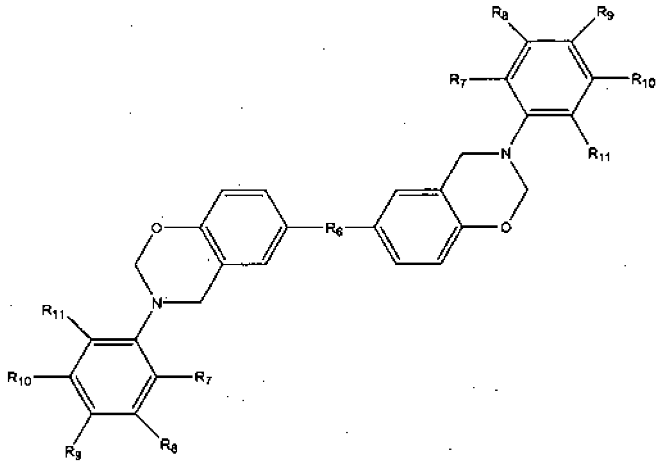

wobei

$R_6$ $-C(CH_3)_2-$, $CH_2$, $-C(CF_3)_2-$, $-C(CHF_2)_2-$, $-C(CH_2F)_2-$ oder eine Gruppe, repräsentiert durch die folgenden Strukturformeln, ist:

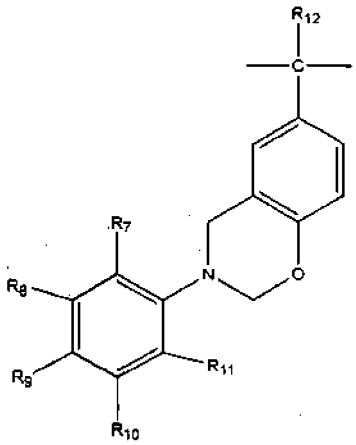

,

wobei:

$R_7$, $R_8$, $R_9$, $R_{10}$ und $R_{11}$ jeweils unabhängig voneinander aus der Gruppe bestehend aus Wasserstoff, einer C1-C20-Alkylgruppe, einer Allylgruppe, einer C6-C20-Arylgruppe, einer t-Butylgruppe, einer C2-C20-Alkenylgruppe, einer C2-C20-Alkynylgruppe, F, einer fluorierten C1-C20-Alkylgruppe und einer fluorierten C6-C20-Arylgruppe ausgewählt werden;

$R_{12}$ Wasserstoff, eine Methylgruppe, eine Ethylgruppe, eine Propylgruppe, F, $CHF_2$, $CH_2F$ oder $CF_3$ ist, und eines von $R_7$, $R_8$, $R_9$, $R_{10}$, und $R_{11}$ F, $CHF_2$, $CH_2F$ oder $CF_3$ ist.

**8.** Elektrode nach Anspruch 7, wobei die Verbindung von Formel 4 aus den Verbindungen, repräsentiert durch die nachfolgenden Formeln 22 bis 26, ausgewählt wird:

<Formel 22>

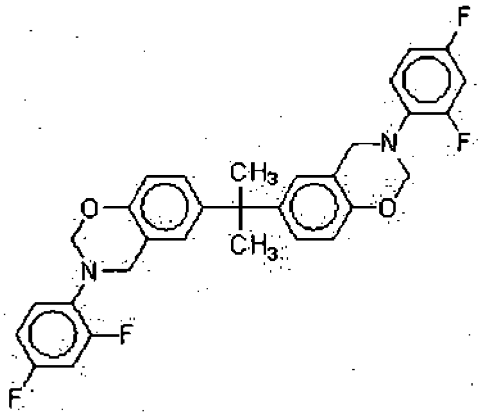

<Formel 23>

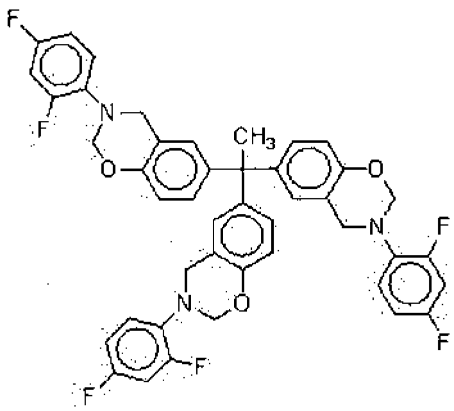

<Formel 24>

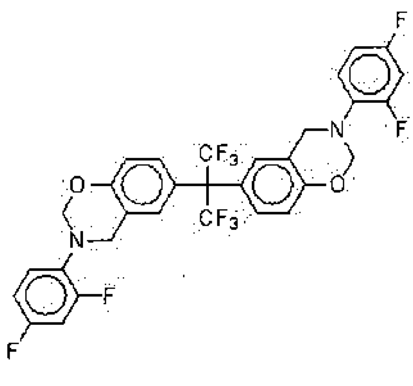

<Formel 25>

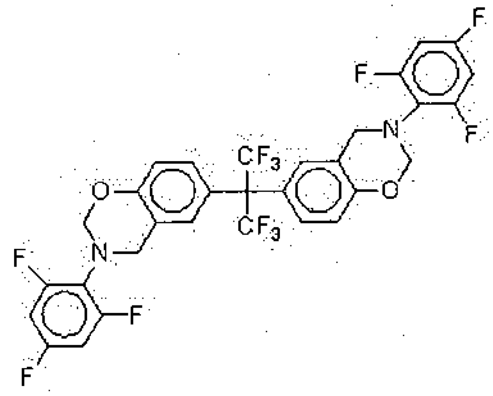

<Formel 26>

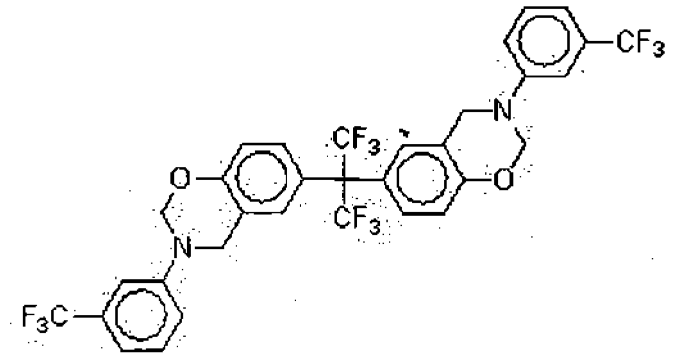

**9.** Elektrode nach einem der Ansprüche 1-8, wobei der Gehalt von mindestens einem Bestandteil ausgewählt aus der Gruppe bestehend aus dem ersten Benzoxazin-Monomer von Formel 1, dem zweiten Benzoxazin-Monomer von Formel 2, der Mischung davon, dem Homopolymer bestehend aus dem ersten Benzoxazin-Monomer, dem Homopolymer bestehend aus dem zweiten Benzoxazin-Monomer und dem Copolymer bestehend aus dem ersten und zweiten Benzoxazin-Monomers zwischen etwa 0,01 und 0,5 Gewichtsanteilen, basierend auf einem Gewichtsanteil des Katalysators, liegt.

**10.** Elektrode nach einem der Ansprüche 1-9, wobei der Katalysator Platin (Pt) oder eine Legierung umfassend Platin und mindestens ein Element ausgewählt aus der Gruppe bestehend aus Gold, Palladium, Rhodium, Iridium, Ruthenium, Zinn, Molybdän, Kobalt und Chrom ist.

**11.** Elektrode nach einem der Ansprüche 1-10, weiterhin umfassend einen Binder.

**12.** Elektrode nach Anspruch 11, wobei der Binder mindestens eines ausgewählt aus der Gruppe bestehend aus Poly(vinylidenfluorid), Polytetrafluorethylen, einem Tetrafluorethylen-Hexafluorethylen-Copolymer und Perfluorethylen ist.

**13.** Elektrode nach Anspruch 11 oder 12, wobei der Gehalt des Binders zwischen etwa 0,001 und 0,5 Gewichtsanteilen, basierend auf 1 Gewichtsanteil des Katalysators, liegt.

**14.** Verfahren zur Herstellung einer Elektrode für eine Brennstoffzelle, wobei das Verfahren Folgendes umfasst:

Auflösen eines Katalysators in einem Lösungsmittel, um eine Dispersionslösung zu erhalten;
Einrühren einer Mischung umfassend ein Lösungsmittel und und mindestens eine Verbindung aus einem ersten Benzoxazin-Monomer, repräsentiert durch nachfolgende Formel 1, und einem zweiten Benzoxazin-Monomer, repräsentiert durch nachfolgende Formel 2, in die Dispersionslösung, um eine Beschichtungslösung zu erhalten;

und

Beschichten einer Oberfläche eines Kohlenstoffträgers mit der Beschichtungslösung:

<Formel 1>

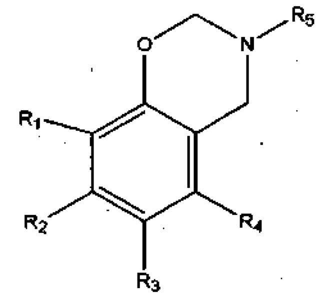

<Formel 2>

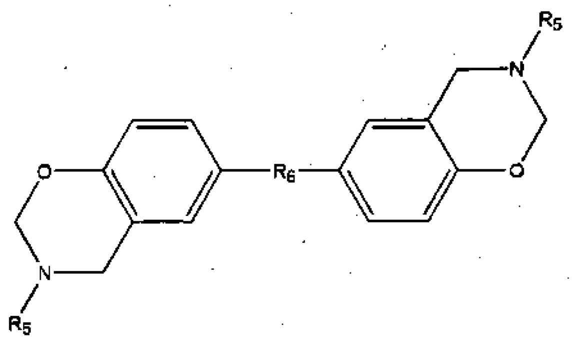

wobei:

$R_1$, $R_2$, $R_3$ und $R_4$ jeweils unabhängig voneinander Wasserstoff, eine substituierte oder unsubstituierte C1-C20-Alkylgruppe, eine substituierte oder unsubstituierte C2-C20-Alkenylgruppe, eine substituierte oder unsubstituierte C2-C20-Alkynylgruppe, eine substituierte oder unsubstituierte C6- C20-Arylgruppe, eine substituierte oder unsubstituierte C2-C20-Heteroarylgruppe, eine substituierte oder unsubstituierte C4-C20-Cycloalkylgruppe oder eine substituierte oder unsubstituierte C2-C20 heterocyclische Gruppe, ein Halogenatom, eine Hydroxygruppe oder eine Cyanogruppe sind;

$R_5$ eine substituierte oder unsubstituierte C1-C20-Alkylgruppe, eine substituierte oder unsubstituierte C2-C20-Alkenylgruppe, eine substituierte oder unsubstituierte C2-C20-Alkynylgruppe, eine substituierte oder unsubstituierte C6-C20-Arylgruppe, eine substituierte oder unsubstituierte C7-C20-Arylalkylgruppe, eine substituierte oder unsubstituierte C2-C20-Heteroarylgruppe, eine substituierte oder unsubstituierte C2-C20-Heteroarylalkylgruppe, eine substituierte oder unsubstituierte C4-C20 carbocyclische Gruppe, eine substituierte oder unsubstituierte C4-C20 carbocyclische Alkylgruppe, eine substituierte oder unsubstituierte C2-C20 heterocyclische Gruppe oder eine substituierte oder unsubstituierte C2-C20 heterocyclische Alkylgruppe ist;

$R_6$ aus der Gruppe bestehend aus einer substituierten oder unsubstituierten C1-C20-Alkylengruppe, einer substituierten oder unsubstituierten C2-C20 Alkenylengruppe, einer substituierten oder unsubstituierten C2-C20-Alkynylengruppe, einer substituierten oder unsubstituierten C6-C20-Arylengruppe, einer substituierten oder unsubstituierten C2-C20-Heteroarylengruppe, - C(=O)- und $-SO_2-$ ausgewählt wird;

wobei in Formel 1 mindestens eines von $R_1$, $R_2$, $R_3$, $R_4$ und $R_5$ Fluor oder eine fluorhaltige Funktionsgruppe ist, und

wobei in Formel 2 mindestens eines ausgewählt aus $R_5$ und $R_6$ Fluor oder eine fluorhaltige Funktionsgruppe ist.

**15.** Brennstoffzelle, umfassend eine Elektrode nach einem der Ansprüche 1-13.

## Revendications

**1.** Electrode pour pile à combustible, l'électrode comprenant une couche de catalyseur comprenant un catalyseur et au moins une composé choisi dans le groupe constitué par un premier monomère de benzoxazine représenté par la formule 1 ci-dessous, un second monomère de benzoxazine représenté par la formule 2 ci-dessous, un mélange de ceux-ci, un homopolymère constitué du premier monomère de benzoxazine, un homopolymère constitué du second monomère de benzoxazine, et un copolymère constitué des premier et second monomères de benzoxazine ; ladite formule 1 étant

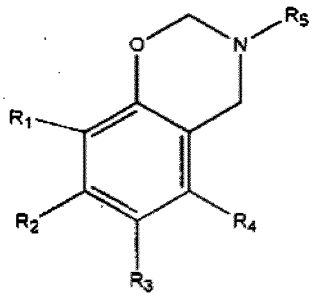

;

ladite formule 2 étant

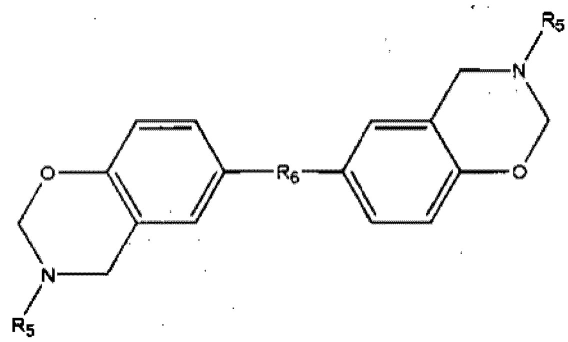

;

dans lesquelles :

$R_1$, $R_2$, $R_3$ et $R_4$ représentent chacun indépendamment un atome d'hydrogène, un groupe alkyle en $C_1$ à $C_{20}$ substitué ou non substitué, un groupe alcényle en $C_2$ à $C_{20}$ substitué ou non substitué, un groupe alcynyle en $C_2$ à $C_{20}$ substitué ou non substitué, un groupe aryle en $C_6$ à $C_{20}$ substitué ou non substitué, un groupe hétéroaryle en $C_2$ à $C_{20}$ substitué ou non substitué, un groupe cycloalkyle en $C_4$ à $C_{20}$ substitué ou non substitué, un groupe hétérocyclique en $C_2$ à $C_{20}$ substitué ou non substitué, un atome d'halogène, un groupe hydroxy et un groupe cyano ;
$R_5$ représente un groupe alkyle en $C_1$ à $C_{20}$ substitué ou non substitué, un groupe alcényle en $C_2$ à $C_{20}$ substitué ou non substitué, un groupe alcynyle en $C_2$ à $C_{20}$ substitué ou non substitué, un groupe aryle en $C_6$ à $C_{20}$ substitué ou non substitué, un groupe arylalkyle en $C_7$ à $C_{20}$ substitué ou non substitué, un groupe hétéroaryle en $C_2$ à $C_{20}$ substitué ou non substitué, un groupe hétéroarylalkyle en $C_2$ à $C_{20}$ substitué ou non substitué, un groupe carbocyclique en $C_4$ à $C_{20}$ substitué ou non substitué, un groupe alkyle carbocyclique en $C_4$ à $C_{20}$ substitué ou non substitué, un groupe hétérocyclique en $C_2$ à $C_{20}$ substitué ou non substitué et un groupe alkyle hétérocyclique en $C_2$ à $C_{20}$ substitué ou non substitué ;
$R_6$ est choisi dans le groupe constitué par un groupe alkylène en $C_1$ à $C_{20}$ substitué ou non substitué, un groupe alcénylène en $C_2$ à $C_{20}$ substitué ou non substitué, un groupe alcynylène en $C_2$ à $C_{20}$ substitué ou non substitué,

un groupe arylène en $C_6$ à $C_{20}$ substitué ou non substitué, un groupe hétéroarylène en $C_2$ à $C_{20}$ substitué ou non substitué, un groupe -C(=O)- et un groupe $-SO_2-$ ; et

dans ladite formule 1, au moins un groupe parmi $R_1$, $R_2$, $R_3$, $R_4$ et $R_5$ représentant un atome de fluor ou un groupe fonctionnel contenant du fluor, et
dans ladite formule 2, au moins un groupe parmi $R_5$ et $R_6$ représentant un atome de fluor ou un groupe fonctionnel contenant du fluor.

**2.** Electrode selon la revendication 1, dans ladite formule 1, $R_1$, $R_2$, $R_3$ et $R_4$ étant choisis dans le groupe constitué par un groupe alkyle en $C_1$ à $C_{20}$, un groupe allyle, un groupe aryle en $C_6$ à $C_{20}$, un groupe alcényle en $C_2$ à $C_{20}$, un groupe alcynyle en $C_2$ à $C_{20}$, un atome de fluor (F), un groupe alkyle en $C_1$ à $C_{20}$ fluoré et un groupe aryle en $C_6$ à $C_{20}$ fluoré.

**3.** Electrode selon la revendication 1 ou 2, dans lesdites formules 1 et 2, $R_5$ représentant un groupe $-CH_2-CH=CH_2$ ou l'un des groupes représentés par les formules suivantes :

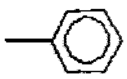 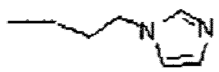 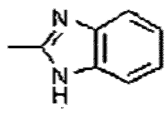 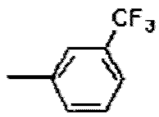

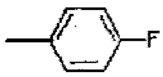 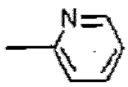 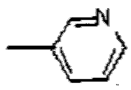 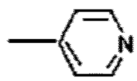 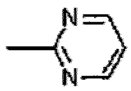

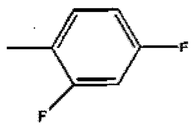 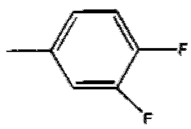

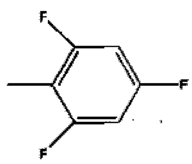 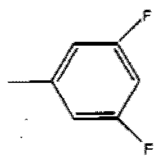

**4.** Electrode selon l'une quelconque des revendications 1 à 3, dans ladite formule 2, $R_6$ étant choisi dans le groupe constitué par un groupe $-C(CH_3)_2-$, $-C(CF_3)_2-$, -C(=O)-, $-SO_2-$,$-CH_2-$, $-C(CCl_3)-$, $-CH(CH_3)-$, $-CH(CF_3)-$, et un groupe représenté par la formule développée suivante :

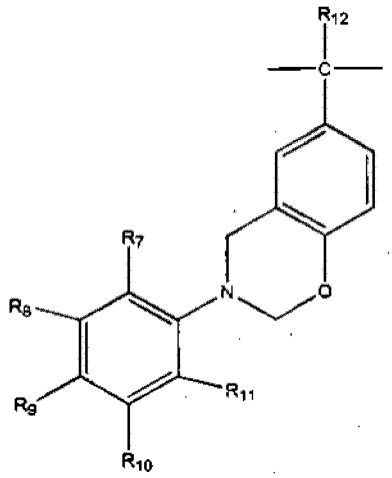

dans laquelle,

$R_7$, $R_8$, $R_9$, $R_{10}$ et $R_{11}$ sont chacun indépendamment choisis dans le groupe constitué par un atome d'hydrogène, un groupe alkyle en $C_1$ à $C_{20}$, un groupe allyle, un groupe aryle en $C_6$ à $C_{20}$, un groupe t-butyle, un groupe alcényle en $C_2$ à $C_{20}$, un groupe alcynyle en $C_2$ à $C_{20}$, un atome F, un groupe alkyle en $C_1$ à $C_{20}$ fluoré et un groupe aryle en $C_6$ à $C_{20}$ fluoré, et
$R_{12}$ est choisi dans le groupe constitué par un atome d'hydrogène, un groupe méthyle, un groupe éthyle, un groupe propyle, un atome F, un groupe $CHF_2$, $CH_2F$ et $CF_3$.

**5.** Electrode selon la revendication 1, ledit premier monomère de benzoxazine de formule 1 étant un composé représenté par la formule 3 ci-dessous :

<Formule 3 >

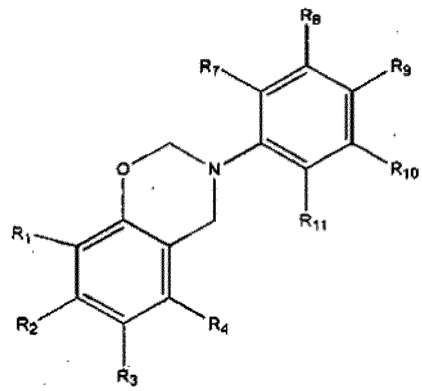

dans laquelle,

$R_1$, $R_2$, $R_3$ et $R_4$ sont chacun indépendamment choisis dans le groupe constitué par un atome d'hydrogène, un atome F, un groupe $CHF_2$, $CH_2F$, $CF_3$ et un groupe alkyle en $C_1$ à $C_{20}$,
$R_7$, $R_8$, $R_9$, $R_{10}$ et $R_{11}$ sont chacun indépendamment choisis dans le groupe constitué par un atome d'hydrogène, un atome F, un groupe $CHF_2$, $CH_2F$, $CF_3$ et un groupe alkyle en $C_1$ à $C_{20}$, et
au moins un groupe parmi $R_1$, $R_2$, $R_3$, $R_4$, $R_7$, $R_8$, $R_9$, $R_{10}$ et $R_{11}$ représentant un atome F, un groupe $CHF_2$, $CH_2F$ ou $CF_3$.

**6.** Electrode selon la revendication 5, ledit composé de formule 3 étant un composé choisi parmi les composés représentés par les formules 5 à 21 ci-dessous :

<Formule 5>

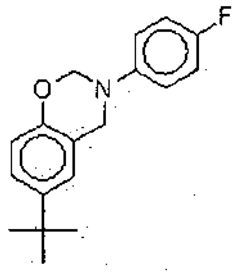

<Formule 6>

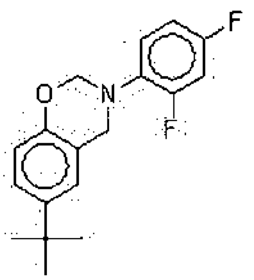

<Formule 7>

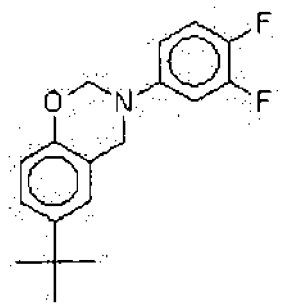

<Formule 8>

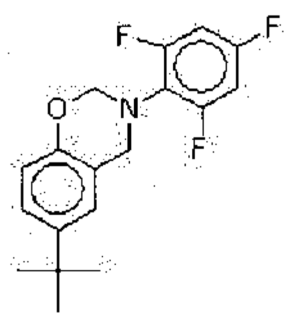

<Formule 9>

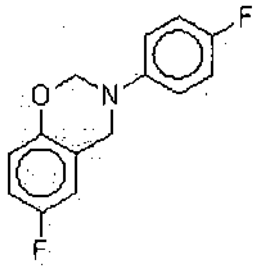

<Formule 10>

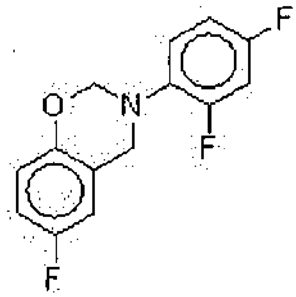

<Formule 11>

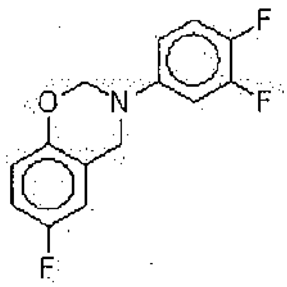

<Formule 12>

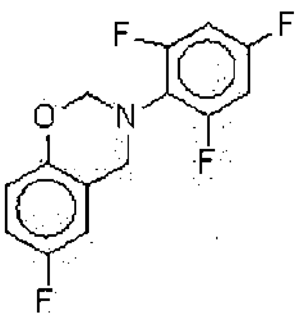

<Formule 13>

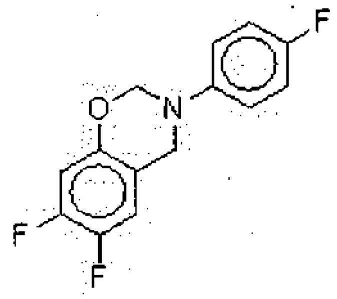

<Formule 14>

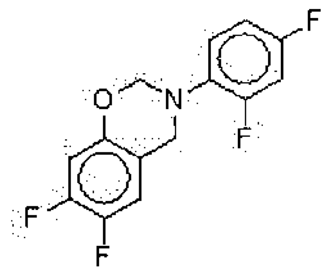

<Formule 15>

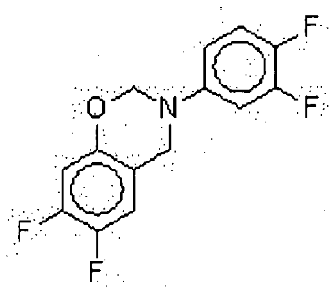

<Formule 16>

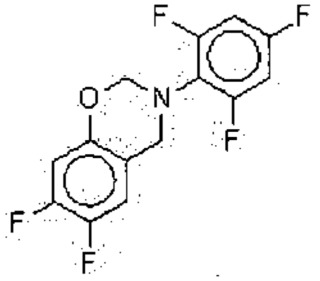

<Formule 17>

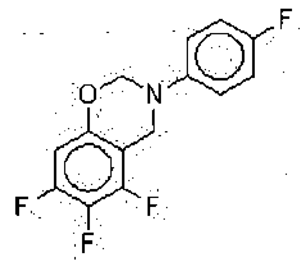

<Formule 18>

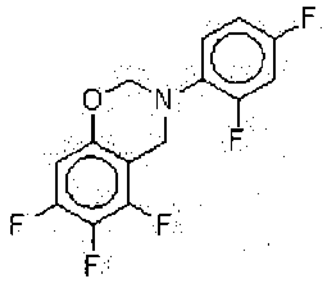

<Formule 19>

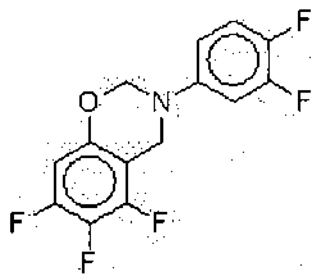

<Formule 20>

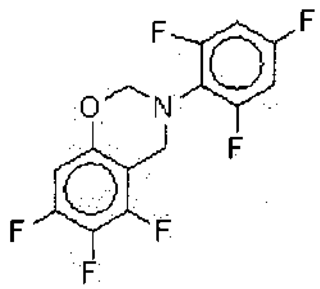

<Formule 21>

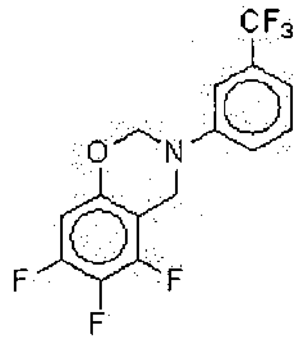

**7.** Electrode selon la revendication 1 ou 6, ledit second monomère de benzoxazine de formule 2 étant un composé représenté par la formule 4 ci-dessous :

<Formule 4>

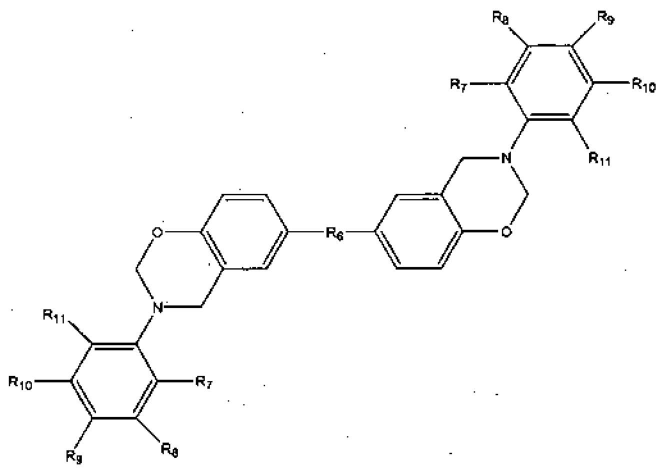

dans laquelle,

$R_6$ représente un groupe $-C(CH_3)_2-$, $CH_2$, $-C(CF_3)_2-$, $-C(CHF_2)_2-$, $-C(CH_2F)_2-$ ou un groupe représenté par la formule développée suivante :

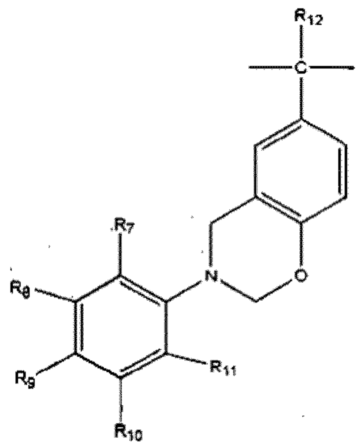

,

dans laquelle :

$R_7$, $R_8$, $R_9$, $R_{10}$ et $R_{11}$ sont chacun indépendamment choisis dans le groupe constitué par un atome d'hydrogène, un groupe alkyle en $C_1$ à $C_{20}$, un groupe allyle, un groupe aryle en $C_6$ à $C_{20}$, un groupe t-butyle, un groupe alcényle en $C_2$ à $C_{20}$, un groupe alcynyle en $C_2$ à $C_{20}$, un atome F, un groupe alkyle en $C_1$ à $C_{20}$ fluoré et un groupe aryle en $C_6$ à $C_{20}$ ;
$R_{12}$ représente un atome d'hydrogène, un groupe méthyle, un groupe éthyle, un groupe propyle, un atome F, un groupe $CHF_2$, $CH_2F$ ou $CF_3$, et
un groupe parmi $R_7$, $R_8$, $R_9$, $R_{10}$ et $R_{11}$ représente un atome F, un groupe $CHF_2$, $CH_2F$ ou $CF_3$.

**8.** Electrode selon la revendication 7, ledit composé de formule 4 étant choisi parmi les composés représentés par les formules 22 à 26 ci-dessous :

<Formule 22>

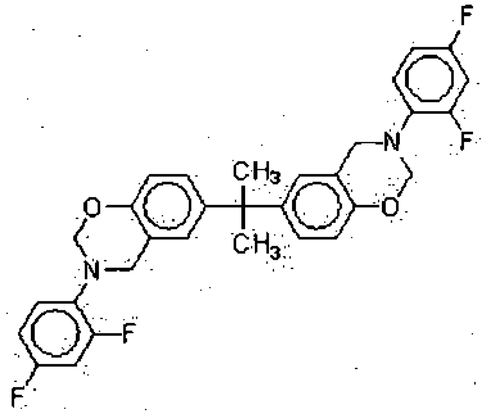

<Formule 23>

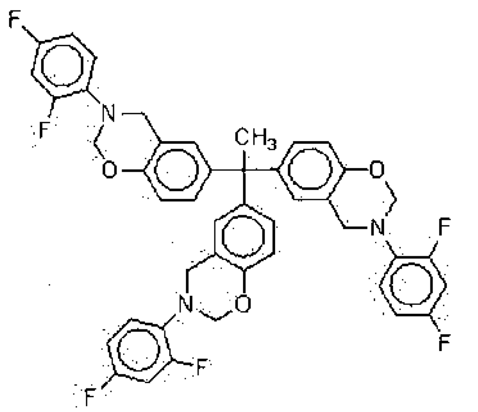

<Formule 24>

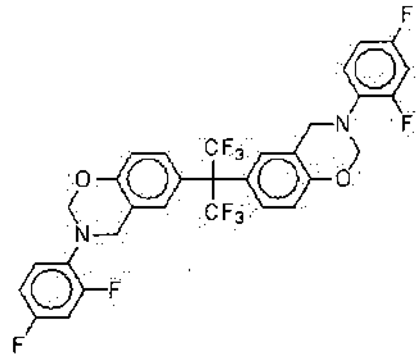

<Formule 25>

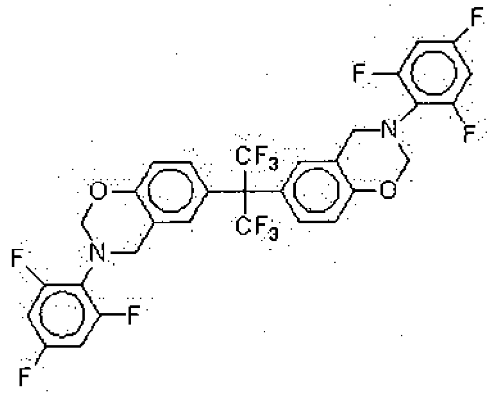

<Formule 26>

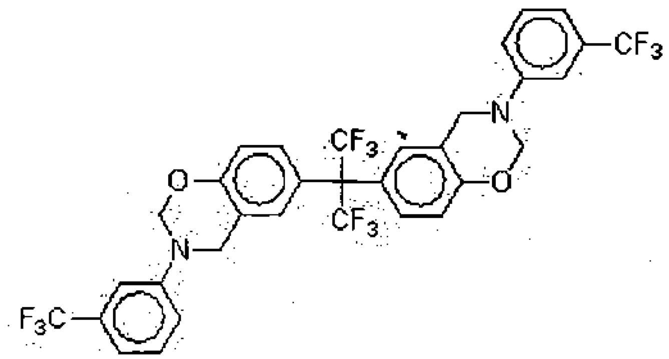

**9.** Electrode selon l'une quelconque des revendications 1 à 8, la teneur d'au moins un composé choisi dans le groupe constitué par le premier monomère de benzoxazine de formule 1, le second monomère de benzoxazine de formule 2, le mélange de ceux-ci, l'homopolymère constitué du premier monomère de benzoxazine, l'homopolymère constitué du second monomère de benzoxazine et le copolymère constitué des premier et second monomères de benzoxazine représentant entre environ 0,01 à 0,5 parties en poids, sur la base de 1 partie en poids du catalyseur.

**10.** Electrode selon l'une quelconque des revendications 1 à 9, ledit catalyseur étant le platine (Pt) ou un alliage comprenant du platine et au moins un composé choisi dans le groupe constitué par l'or, le palladium, le rhodium, l'iridium, le ruthénium, l'étain, le molybdène, le cobalt et le chrome.

**11.** Electrode selon l'une quelconque des revendications 1 à 10, comprenant en outre un liant.

**12.** Electrode selon la revendication 11, ledit liant étant au moins un composé choisi dans le groupe constitué par le fluorure de polyvinylidène, le polytétrafluoroéthylène, un copolymère tétrafluoroéthylène-hexafluoroéthylène et le perfluoroéthylène.

**13.** Electrode selon la revendication 11 ou 12, la teneur du liant représentant d'environ 0,001 à 0,5 partie en poids, sur la base de 1 partie en poids du catalyseur.

**14.** Procédé de fabrication d'une électrode pour pile à combustible, le procédé comprenant les étapes consistant à :

disperser un catalyseur dans un solvant pour obtenir une solution en dispersion ;
agiter un mélange comprenant un solvant et au moins un composé parmi un premier monomère de benzoxazine représenté par la formule 1 ci-dessous et un second monomère de benzoxazine représenté par la formule 2 ci-dessous dans la solution en dispersion, pour obtenir une solution de revêtement ; et
enduire la solution de revêtement sur une surface d'un support en carbone :

<Formule 1>

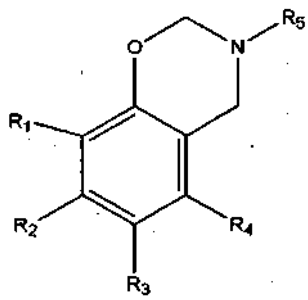

<Formule 2>

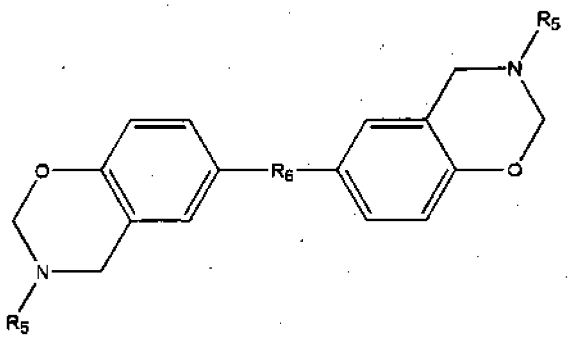

dans lesquelles :

$R_1$, $R_2$, $R_3$ et $R_4$ représentent chacun indépendamment un atome d'hydrogène, un groupe alkyle en $C_1$ à $C_{20}$ substitué ou non substitué, un groupe alcényle en $C_2$ à $C_{20}$ substitué ou non substitué, un groupe alcynyle en $C_2$ à $C_{20}$ substitué ou non substitué, un groupe aryle en $C_6$ à $C_{20}$ substitué ou non substitué, un groupe hétéroaryle en $C_2$ à $C_{20}$ substitué ou non substitué, un groupe cycloalkyle en $C_4$ à $C_{20}$ substitué ou non substitué, ou un groupe hétérocyclique en $C_2$ à $C_{20}$ substitué ou non substitué, un atome d'halogène, un groupe hydroxy ou un groupe cyano ;
$R_5$ représente un groupe alkyle en $C_1$ à $C_{20}$ substitué ou non substitué, un groupe alcényle en $C_2$ à $C_{20}$ substitué ou non substitué, un groupe alcynyle en $C_2$ à $C_{20}$ substitué ou non substitué, un groupe aryle en $C_6$ à $C_{20}$ substitué ou non substitué, un groupe arylalkyle en $C_7$ à $C_{20}$ substitué ou non substitué, un groupe hétéroaryle en $C_2$ à $C_{20}$ substitué ou non substitué, un groupe hétéroarylalkyle en $C_2$ à $C_{20}$ substitué ou

non substitué, un groupe carbocyclique en $C_4$ à $C_{20}$ substitué ou non substitué, un groupe alkyle carbocyclique en $C_4$ à $C_{20}$ substitué ou non substitué, un groupe hétérocyclique en $C_2$ à $C_{20}$ substitué ou non substitué, ou un groupe alkyle hétérocyclique en $C_2$ à $C_{20}$ substitué ou non substitué ;
$R_6$ est choisi dans le groupe constitué par un groupe alkylène en $C_1$ à $C_{20}$ substitué ou non substitué, un groupe alcénylène en $C_2$ à $C_{20}$ substitué ou non substitué, un groupe alcynylène en $C_2$ à $C_{20}$ substitué ou non substitué, un groupe arylène en $C_6$ à $C_{20}$ substitué ou non substitué, un groupe hétéroarylène en $C_2$ à $C_{20}$ substitué ou non substitué, un groupe -C(=O)- et un groupe $-SO_2-$ ;

dans ladite formule 1, au moins un groupe parmi $R_1$, $R_2$, $R_3$, $R_4$ et $R_5$ représentant un atome de fluor ou un groupe fonctionnel contenant du fluor, et
dans ladite formule 2, au moins un groupe parmi $R_5$ et $R_6$ représentant un atome de fluor ou un groupe fonctionnel contenant du fluor.

**15.** Pile à combustible comprenant une électrode selon l'une quelconque des revendications 1 à 13.

FIG. 1

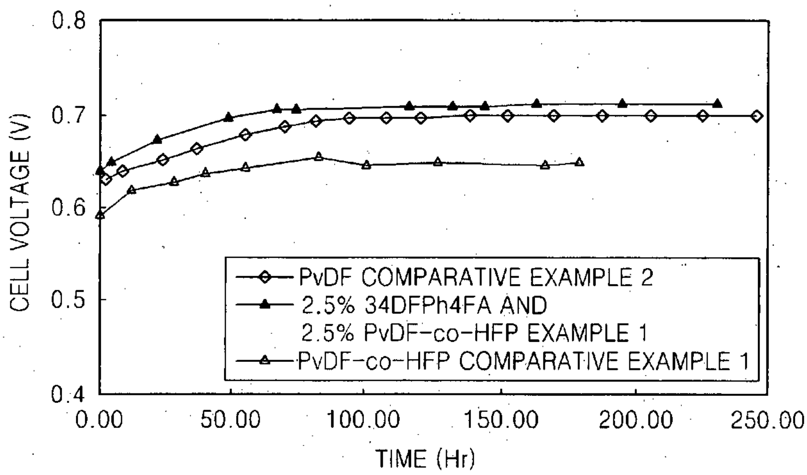
0.8
0.7
0.6
0.5
0.4
CELL VOLTAGE (V)
PvDF COMPARATIVE EXAMPLE 2
2.5% 34DFPh4FA AND
2.5% PvDF-co-HFP EXAMPLE 1
PvDF-co-HFP COMPARATIVE EXAMPLE 1
0.00
50.00
100.00
150.00
200.00
250.00
TIME (Hr)

FIG. 2

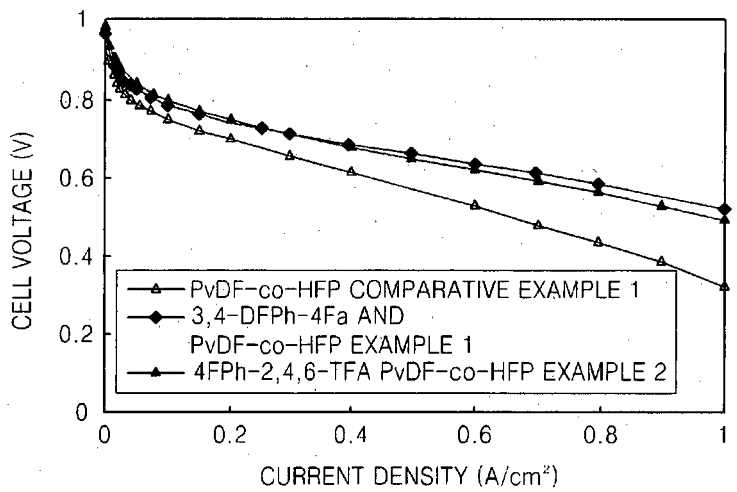
1
0.8
0.6
0.4
0.2
0
CELL VOLTAGE (V)
PvDF-co-HFP COMPARATIVE EXAMPLE 1
3,4-DFPh-4Fa AND
PvDF-co-HFP EXAMPLE 1
4FPh-2,4,6-TFA PvDF-co-HFP EXAMPLE 2
0
0.2
0.4
0.6
0.8
1
CURRENT DENSITY (A/cm²)

FIG. 3

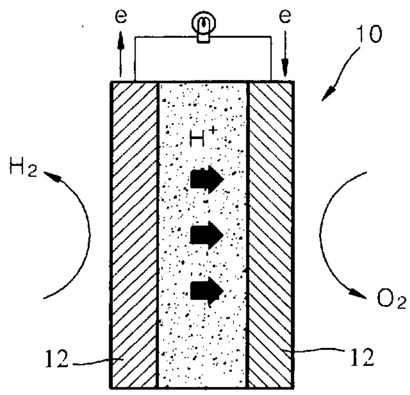

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI11503262 B
- JP HEI05283082 B
- EP 1881549 A